# EUROPEAN PATENT APPLICATION

(11) **EP 4 848 768 A1**
(43) Date of publication of application: **02.12.2026**
(21) Application number: 25751211.1
(22) Date of filing: 21.01.2025
(51) Int. Cl.: H04W 8/24

(54) **COMMUNICATION METHOD AND COMMUNICATION APPARATUS**

(30) Priority: 08.02.2024 CN 202410177161; 22.03.2024 CN 202410350570
(71) Applicant: Huawei Technologies Co., Ltd., Shenzhen, Guangdong 518129 (CN)
(72) Inventor: LI, Lun, Shenzhen, Guangdong 518129 (CN); LI, Meng, Shenzhen, Guangdong 518129 (CN); SUN, Haiyang, Shenzhen, Guangdong 518129 (CN); ZHANG, Jian, Shenzhen, Guangdong 518129 (CN)
(74) Representative: Isarpatent
(86) International application number: PCT/CN2025/073774
(87) International publication number: WO 2025/167609

(57) **Abstract**

This application provides a communication method and a communication apparatus. The communication method includes: receiving a first request, where the first request is used to request energy consumption information, the energy consumption information is used to determine energy consumption for a network to transmit data, and the data includes first data of a session; sending a second request to a first user plane network element based on the first request, where the second request is used to request information related to energy consumption for the first user plane network element to transmit the first data; and in response to updating, from the first user plane network element to a second user plane network element, a user plane network element transmitting the first data or in response to inserting a second user plane network element to transmit the first data, sending a third request to the second user plane network element, where the third request is used to request information related to energy consumption for the second user plane network element to transmit the first data. According to this technical solution, accuracy of the determined energy consumption for the network to transmit the data can be improved.

## Description

This application claims priorities to Chinese Patent Application No. 202410177161.1, filed with the China National Intellectual Property Administration on February 8, 2024 and entitled "COMMUNICATION METHOD, APPARATUS, AND SYSTEM", and to Chinese Patent Application No. 202410350570.7, filed with the China National Intellectual Property Administration on March 22, 2024 and entitled "COMMUNICATION METHOD AND COMMUNICATION APPARATUS", both of which are incorporated herein by reference in their entireties.

### TECHNICAL FIELD

Embodiments of this application relate to the communication field, and in particular, to a communication method and a communication apparatus.

### BACKGROUND

A mobile network operator (mobile network operator, MNO) may deploy a network to provide a mobile communication service for a terminal device. Energy consumption is generated when the network serves the terminal device. Energy consumption costs are an important part of operating costs of the MNO, and excessively high energy consumption also has adverse impact on an environment. Therefore, how to determine the energy consumption generated when the network serves the terminal device becomes an urgent technical problem to be resolved.

Currently, a method for determining the energy consumption generated when the network serves the terminal device is as follows: When a network element 1 in the network receives a request used to request the energy consumption for the network to serve the terminal device, the network element 1 determines network elements serving the terminal device in the network, and then requests the network elements to provide energy consumption information, so as to determine, based on the energy consumption information provided by the network elements, the energy consumption generated when the network side serves the terminal device. However, the energy consumption determined by using the foregoing method may be inaccurate.

### SUMMARY

This application provides a communication method, to more accurately determine energy consumption generated by a network for serving a terminal device.

According to a first aspect, this application provides a communication method. The communication method is applied to a session management network element in a network, or a component (for example, a chip or a chip system) disposed in a session management network element, or a logic module or software that can implement all or a part of functions of a session management network element. This is not limited in this application. In this application, the session management network element is used as an example for description.

For example, the communication method includes: receiving a first request, where the first request is used to request energy consumption information, the energy consumption information is used to determine energy consumption for the network to transmit data, and the data includes first data of a session; sending a second request to a first user plane network element based on the first request, where the second request is used to request information related to energy consumption for the first user plane network element to transmit the first data; and in response to updating, from the first user plane network element to a second user plane network element, a user plane network element transmitting the first data, or in response to inserting a second user plane network element to transmit the first data, sending a third request to the second user plane network element, where the third request is used to request information related to energy consumption for the second user plane network element to transmit the first data.

For example, after receiving the first request used to request the energy consumption information, the session management network element determines, based on the first request, that a network element that needs to provide the energy consumption information includes the first user plane network element, and then sends the second request to the first user plane network element, to request the first user plane network element to provide the information related to the energy consumption for the first user plane network element to transmit the first data. In this embodiment of this application, the information related to the energy consumption for the first user plane network element to transmit the first data is also referred to as first energy consumption information. The first data is included in the foregoing data.

That the second request is used to request the information related to the energy consumption for the first user plane network element to transmit the first data may also be explained as any one of the following: (1) The second request is used to request information that affects the energy consumption for the first user plane network element to transmit the first data. (2) The second request is used to request the first energy consumption information, where the first energy consumption information is related to the energy consumption for the first user plane network element to transmit the first data. (3) The second request is used to request the first energy consumption information, where the first energy consumption information indicates/represents/describes a feature of transmitting the first data by the first user plane network element.

For example, the first energy consumption information includes at least one of the following: a rate at which the first user plane network element transmits the first data, or a data volume of the first data transmitted by the first user plane network element.

In this technical solution, the session management network element sends, in response to updating, from the first user plane network element to the second user plane network element, the user plane network element transmitting the first data, or in response to inserting the second user plane network element to transmit the first data, the third request to the second user plane network element, to request the information related to the energy consumption for the second user plane network element to transmit the first data. This step may also be explained as follows: The session management network element selects the second user plane network element to transmit the first data, and sends the third request to the second user plane network element. That the session management network element selects the second user plane network element to transmit the first data includes: selecting the second user plane network element as an anchor user plane network element for transmitting the first data, or inserting the second user plane network element as an intermediate user plane network element to transmit the first data.

Optionally, updating, from the first user plane network element to the second user plane network element, the user plane network element transmitting the first data may also be replaced with switching, from the first user plane network element to the second user plane network element, the user plane network element transmitting the first data, or changing, from the first user plane network element to the second user plane network element, the user plane network element transmitting the first data.

Optionally, inserting the second user plane network element to transmit the first data may also be replaced with adding the second user plane network element for transmitting the first data, or adding the second user plane network element to transmit the first data.

In this application, the information related to the energy consumption for the second user plane network element to transmit the first data is also referred to as second energy consumption information. That the third request is used to request the information related to the energy consumption for the second user plane network element to transmit the first data may also be explained as any one of the following: (1) The third request is used to request information that affects the energy consumption for the second user plane network element to transmit the first data. (2) The third request is used to request the second energy consumption information, where the second energy consumption information is related to the energy consumption for the second user plane network element to transmit the first data. (3) The third request is used to request the second energy consumption information, where the second energy consumption information indicates/represents/describes a feature of transmitting the first data by the second user plane network element.

For example, the second energy consumption information includes at least one of the following: a rate at which the second user plane network element transmits the first data, or a data volume of the first data transmitted by the second user plane network element.

Optionally, requests in the first request, the second request, and the third request may also be replaced with queries. To be specific, the first request may be replaced with a first query, the second request may be replaced with a second query, and the third request may be replaced with a third query.

It can be learned that, in this technical solution, after the user plane network element transmitting the first data is updated from the first user plane network element to the second user plane network element, or after the second user plane network element is inserted to transmit the first data, the session management network element further requests the second user plane network element to provide the second energy consumption information, so as to determine, based on the second energy consumption information, the energy consumption for the network to transmit the data. In this way, the determined energy consumption includes the energy consumption generated by the second user plane network element for transmitting the first data, and accuracy is higher.

With reference to the first aspect, in a possible implementation, the method further includes: sending first information to the second user plane network element, where the first information indicates a moment at which the second user plane network element sends the information related to the energy consumption for the second user plane network element to transmit the first data. In other words, the first information indicates a moment at which the second user plane network element sends the second energy consumption information.

In this technical solution, the session management network element further indicates, to the second user plane network element, a moment at which the second energy consumption information is sent. The indicated moment is also referred to as a first moment. It may be understood that, when the first moment is indicated, after receiving the first information, the second user plane network element sends the second energy consumption information at the first moment.

With reference to the first aspect, in a possible implementation, sending, by the session management network element, the first information to the second user plane network element includes: sending the first information to the second user plane network element when the first request indicates to periodically send the energy consumption information.

With reference to the first aspect, in a possible implementation, sending, by the session management network element, the third request to the second user plane network element includes: sending the third request to the second user plane network element based on the first request. Alternatively, this may be explained as follows: when determining that the first request exists, the session management network element sends the third request to the second user plane network element.

For example, in an implementation, sending the third request to the second user plane network element based on the first request includes: sending the third request to the second user plane network element when the first request meets a first condition, where the first condition includes: The energy consumption information requested by the first request is related to the first data.

In other words, in this implementation, the session management network element determines, based on whether the energy consumption information requested by the first request is related to the first data, whether to request the second energy consumption information from the second user plane network element.

For example, in another implementation, sending the third request to the second user plane network element based on the first request includes: sending the third request to the second user plane network element when a second condition is met, where the second condition includes: A timer does not expire when the user plane network element transmitting the first data is updated from the first user plane network element to the second user plane network element; or a timer does not expire when the second user plane network element is inserted to transmit the first data. The timer is started when the session management network element receives the first request.

With reference to the first aspect, in a possible implementation, the first request received by the session management network element includes information about the session. Before sending the second request to the first user plane network element based on the first request, the method further includes: determining, based on the information about the session, the first user plane network element transmitting the first data.

Optionally, receiving the first request includes: receiving the first request from a first network element. The method further includes: sending, to the first network element, information used to identify the second user plane network element.

In this implementation, after the session management network element sends, to the first network element, the information used to identify the second user plane network element, the first network element may obtain, based on the information, energy consumption generated by the second user plane network element, and obtain, based on the energy consumption generated by the second user plane network element and the second energy consumption information, the energy consumption for the second user plane network element to transmit the first data, thereby improving accuracy of the determined energy consumption for the network side to transmit the data.

According to a second aspect, this application provides a communication method. The communication method is applied to a second network element in a network, or a component (for example, a chip or a chip system) disposed in a second network element, or a logic module or software that can implement all or a part of functions of a second network element. This is not limited in this application. In this application, the second network element is used as an example for description.

For example, the communication method includes: receiving a fourth request, where the fourth request is used to request information related to energy consumption for the second network element to serve a terminal device; and in response to switching, from the second network element to a third network element, a network element serving the terminal device, sending a fifth request to the third network element, where the fifth request is used to request information related to energy consumption for the third network element to serve the terminal device.

The second network element may be considered as a network element that serves the terminal device before switching. Therefore, the second network element is also referred to as a source network element, and the third network element is also referred to as a target network element.

The information related to the energy consumption for the second network element to serve the terminal device is referred to as third energy consumption information, and the information related to the energy consumption for the third network element to serve the terminal device is referred to as fourth energy consumption information. It may be understood that, the energy consumption generated by the second network element for serving the terminal device may be determined based on the third energy consumption information, and the energy consumption generated by the third network element for serving the terminal device may be determined based on the fourth energy consumption information.

In this technical solution, after the network element serving the terminal device is switched, the source network element further requests the target network element to provide the fourth energy consumption information for the first network element, so as to determine, based on the fourth energy consumption information, energy consumption generated by the network for serving the terminal device. In this way, the determined energy consumption may include the energy consumption generated by the third network element for serving the terminal device, and accuracy is higher.

With reference to the second aspect, in a possible implementation, the information related to the energy consumption for the second network element to serve the terminal device includes at least one of the following: a ratio of a quantity of pieces of signaling of the terminal device transmitted by the second network element to a total quantity of pieces of signaling transmitted by the second network element, or a quantity of pieces of signaling of the terminal device transmitted by the second network element; and the information related to the energy consumption for the third network element to serve the terminal device includes at least one of the following: a ratio of a quantity of pieces of signaling of the terminal device transmitted by the third network element to a total quantity of pieces of signaling transmitted by the third network element, or a quantity of pieces of signaling of the terminal device transmitted by the third network element.

With reference to the second aspect, in a possible implementation, the method further includes: sending, to the third network element, the information related to the energy consumption for the second network element to serve the terminal device.

In this technical solution, when requesting the third network element to provide the fourth energy consumption information for the first network element, the second network element further sends, to the third network element, the third energy consumption information determined by the second network element before switching. In this way, the third energy consumption information can be sent to the first network element via the third network element.

With reference to the second aspect, in a possible implementation, the method further includes: sending second information to the third network element, where the second information indicates a moment at which the third network element sends the information related to the energy consumption for the third network element to serve the terminal device.

According to a third aspect, this application provides a communication method. The communication method is applied to a third network element in a network, or a component (for example, a chip or a chip system) disposed in a third network element, or a logic module or software that can implement all or a part of functions of a third network element. This is not limited in this application. In this application, the third network element is used as an example for description.

For example, the communication method includes: receiving a fifth request from a second network element, where the fifth request is used to request information related to energy consumption for the third network element to serve a terminal device, the second network element is a source network element serving the terminal device, and the third network element is a target network element serving the terminal device; and sending, based on the fifth request, the information related to the energy consumption for the third network element to serve the terminal device.

As described in the second aspect, the information related to the energy consumption for the third network element to serve the terminal device is referred to as fourth energy consumption information.

In this technical solution, after a network element serving the terminal device is switched from the second network element to the third network element, the third network element receives, from the second network element, the fifth request used to request the fourth energy consumption information, and sends the fourth energy consumption information based on the fifth request, so as to determine, based on the fourth energy consumption information, energy consumption generated by the network for serving the terminal device. In this way, the determined energy consumption may include the energy consumption generated by the third network element for serving the terminal device, and accuracy is higher. With reference to the third aspect, in a possible implementation, the method further includes: receiving, from the second network element, information related to energy consumption for the second network element to serve the terminal device; and sending the information related to the energy consumption for the second network element to serve the terminal device.

With reference to the third aspect, in a possible implementation, the third network element serving the terminal device includes: The third network element transmits signaling of the terminal device; and the information related to the energy consumption for the third network element to serve the terminal device includes: a ratio of a quantity of pieces of signaling of the terminal device transmitted by the third network element to a total quantity of pieces of signaling transmitted by the third network element, or a quantity of pieces of signaling of the terminal device transmitted by the third network element.

With reference to the third aspect, in a possible implementation, the method further includes: receiving second information from the second network element, where the second information indicates a moment at which the third network element sends the information related to the energy consumption for the third network element to serve the terminal device.

With reference to the third aspect, in a possible implementation, the method further includes: determining, based on the second information, the information related to the energy consumption for the third network element to serve the terminal device.

According to a fourth aspect, this application provides a communication method. The communication method is applied to a first network element in a network, or a component (for example, a chip or a chip system) disposed in a first network element, or a logic module or software that can implement all or a part of functions of a first network element. This is not limited in this application. In this application, the first network element is used as an example for description.

For example, the communication method includes: receiving, from a third network element, information related to energy consumption for the third network element to serve a terminal device, where the information related to the energy consumption for the third network element to serve the terminal device includes at least one of the following: a ratio of a quantity of pieces of signaling of the terminal device transmitted by the third network element to a total quantity of pieces of signaling transmitted by the third network element, or a quantity of pieces of signaling of the terminal device transmitted by the third network element; and determining, based on the information related to the energy consumption for the third network element to serve the terminal device, energy consumption for the network to serve the terminal device.

As described in the second aspect and the third aspect, the information related to the energy consumption for the third network element to serve the terminal device is referred to as fourth energy consumption information.

In this technical solution, after a network element serving the terminal device is switched from a second network element to the third network element, the first network element further receives the fourth energy consumption information from the third network element, and the first network element may further determine, based on the fourth energy consumption information, the energy consumption generated by the network for serving the terminal device. In this way, the determined energy consumption may include the energy consumption generated by the third network element for serving the terminal device, and accuracy is higher.

With reference to the fourth aspect, in a possible implementation, determining the energy consumption for the network to serve the terminal device includes: determining, based on total energy consumed by the third network element, the ratio of the quantity of pieces of signaling of the terminal device transmitted by the third network element to the total quantity of pieces of signaling transmitted by the third network element, and basic power consumption of the third network element, the energy consumption for the third network element to serve the terminal device; and determining, based on the energy consumption for the third network element to serve the terminal device, the energy consumption for the network to serve the terminal device.

With reference to the fourth aspect, in a possible implementation, the method further includes: receiving information related to energy consumption for a second network element to serve the terminal device, where the information related to the energy consumption for the second network element to serve the terminal device includes at least one of the following: a ratio of a quantity of pieces of signaling of the terminal device transmitted by the second network element to a total quantity of pieces of signaling transmitted by the second network element, or a quantity of pieces of signaling of the terminal device transmitted by the second network element; and determining, based on the information related to the energy consumption for the second network element to serve the terminal device, the energy consumption for the second network element to serve the terminal device.

According to a fifth aspect, this application provides a communication method. The communication method is applied to a first network element in a network, or a component (for example, a chip or a chip system) disposed in a first network element, or a logic module or software that can implement all or a part of functions of a first network element. This is not limited in this application. In this application, the first network element is used as an example for description.

For example, the communication method includes: obtaining indication information, where the indication information indicates that a network element serving a terminal device is switched; and sending a sixth request to a fifth network element that serves the terminal device after switching, where the sixth request is used to request information related to energy consumption for the fifth network element to serve the terminal device.

The information related to the energy consumption for the fifth network element to serve the terminal device is also referred to as fifth energy consumption information. A network element that serves the terminal device before switching is also referred to as a source network element, and the fifth network element that serves the terminal device after switching is also referred to as a target network element.

In this technical solution, the first network element may learn that the network element serving the terminal device is switched, and request the fifth energy consumption information from the fifth network element after switching, so as to determine, based on the fifth energy consumption information, energy consumption generated by the network for serving the terminal device. In this way, the determined energy consumption may include the energy consumption generated by the fifth network element for serving the terminal device, and accuracy is higher.

With reference to the fifth aspect, in a possible implementation, the indication information includes information used to identify the fifth network element.

With reference to the fifth aspect, in a possible implementation, the method further includes: receiving a seventh request, where the seventh request is used to request energy consumption for the network to serve the terminal device. Sending the sixth request to the fifth network element that serves the terminal device after switching includes: sending the sixth request to the fifth network element based on the seventh request.

With reference to the fifth aspect, in a possible implementation, sending the sixth request to the fifth network element based on the seventh request includes: sending the sixth request to the fifth network element when the seventh request indicates to periodically send the energy consumption.

According to a sixth aspect, this application provides a communication apparatus, including a module configured to perform the method according to any one of the first aspect or the possible implementations of the first aspect.

According to a seventh aspect, this application provides a communication apparatus, including a module configured to perform the method according to any one of the second aspect or the possible implementations of the second aspect.

According to an eighth aspect, this application provides a communication apparatus, including a module configured to perform the method according to any one of the third aspect or the possible implementations of the third aspect.

According to a ninth aspect, this application provides a communication apparatus, including a module configured to perform the method according to any one of the fourth aspect or the possible implementations of the fourth aspect.

According to a tenth aspect, this application provides a communication apparatus, including a module configured to perform the method according to any one of the fifth aspect or the possible implementations of the fifth aspect.

According to an eleventh aspect, this application provides a communication system. The system includes a session management network element, a first user plane network element, and a second user plane network element. The session management network element is configured to implement the method according to any one of the first aspect or the possible implementations of the first aspect. The first user plane network element is configured to receive a second request from the session management network element. The second user plane network element is configured to receive a third request from the session management network element.

According to a twelfth aspect, this application provides a communication system. The system includes a first network element, a second network element, and a third network element. The second network element is configured to implement the method according to any one of the second aspect or the possible implementations of the second aspect. The third network element is configured to implement the method according to any one of the third aspect or the possible implementations of the third aspect. The first network element is configured to implement the method according to any one of the fourth aspect or the possible implementations of the fourth aspect.

According to a thirteenth aspect, this application provides a communication system. The system includes a first network element and a fifth network element. The first network element is configured to implement the method according to any one of the fifth aspect or the possible implementations of the fifth aspect. The fifth network element is configured to receive a sixth request from the first network element.

According to a fourteenth aspect, this application provides a communication apparatus, including a processor. The processor is configured to perform the communication method according to any one of the first aspect, the second aspect, the third aspect, the fourth aspect, the fifth aspect, or the possible implementations thereof. The communication apparatus may be, for example, a chip or chip system used in a terminal device.

The apparatus may further include a memory, configured to store instructions and data. The memory is coupled to the processor. When executing the instructions stored in the memory, the processor may implement the method described in any one of the first aspect, the second aspect, the third aspect, the fourth aspect, the fifth aspect, or the possible implementations thereof. The apparatus may further include a communication interface. The communication interface is used by the apparatus to communicate with another device. For example, the communication interface may be a transceiver, a circuit, a bus, a module, or another type of communication interface.

According to a fifteenth aspect, this application provides a computer-readable storage medium. The computer-readable medium stores program code to be executed by a communication apparatus, and the program code includes instructions for implementing the method according to any one of the first aspect, the second aspect, the third aspect, the fourth aspect, the fifth aspect, or the possible implementations thereof.

According to a sixteenth aspect, this application provides a computer program product including instructions. When the computer program product runs on a communication apparatus, the communication apparatus is enabled to implement the method according to any one of the first aspect, the second aspect, the third aspect, the fourth aspect, the fifth aspect, or the possible implementations thereof.

### BRIEF DESCRIPTION OF DRAWINGS

FIG. 1 is a diagram of a network architecture to which an embodiment of this application is applicable;
FIG. 2A and FIG. 2B are a schematic flowchart of a method for determining energy consumption generated when a network side serves a terminal device in the conventional technology;
Each of FIG. 3 to FIG. 5 is a schematic flowchart of a communication method according to an embodiment of this application; and
Each of FIG. 6 and FIG. 7 is a block diagram of a communication apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

Before a communication method and a related apparatus according to embodiments of this application are described, the following several points are first described.

First, "first", "second", and various reference numerals in the following embodiments are merely used for differentiation for ease of description, but are not intended to limit the scope of embodiments of this application.

Second, "at least one" means one or more, and "a plurality of" means two or more. The term "and/or" describes an association relationship between associated objects and indicates that three relationships may exist. For example, A and/or B may indicate the following cases: Only A exists, both A and B exist, and only B exists. A and B may be singular or plural. The character "/" usually indicates an "or" relationship between the associated objects. "At least one of the following items (pieces)" or a similar expression thereof indicates any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

Third, "sending" and "receiving" in this application represent signal transmission directions. "Sending" may also be understood as "output" of a chip interface, and "receiving" may also be understood as "input" of the chip interface. In other words, sending and receiving may be performed between devices, for example, between a terminal device and a (radio) access network device, or may be performed inside a device, for example, sending or receiving is performed between components, modules, chips, software modules, or hardware modules inside the device through a bus, a cable, or an interface.

Fourth, a network element in a communication system may send a signal to another network element or receive a signal from another network element. The signal may include information, signaling, data, and the like. The network element may also be replaced with an entity, a network entity, a device, a communication device, a communication module, a node, a communication node, or the like. In embodiments of this application, the network element is used as an example for description. For example, the communication system may include at least one terminal device and at least one (radio) access network device. The (radio) access network device may send a downlink signal to the terminal device, and/or the terminal device may send an uplink signal to the (radio) access network device. In addition, it may be understood that, if the communication system includes a plurality of terminal devices, the plurality of terminal devices may also send signals to each other. In other words, both a signal sending network element and a signal receiving network element may be terminal devices.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system like a 6th generation (6th generation, 6G) mobile communication system, or a converged system of a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

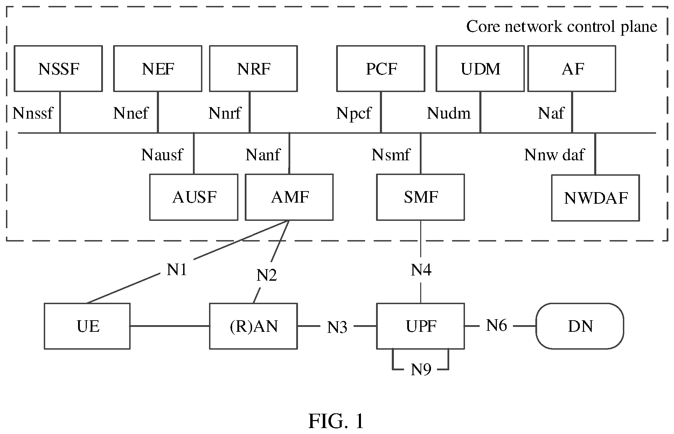

FIG. 1 is a diagram of a network architecture to which an embodiment of this application is applicable. As shown in FIG. 1, the network architecture may include a terminal device, a (radio) access network ((radio) access network, (R)AN), a core network, and a data network (data network, DN). The terminal device accesses the DN via the access network and the core network.

The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, a user apparatus, or the like. The terminal device may be a device that provides voice/data, for example, a handheld device or vehicle-mounted device that has a wireless connection function. Currently, some terminals are, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, a terminal device in a future evolved public land mobile communication network (public land mobile network, PLMN), or the like. This is not limited in embodiments of this application.

By way of example and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, watches, clothes, and shoes. The wearable device is a portable device that can be directly worn on a body or integrated into clothes or an accessory of a user. The wearable device not only is a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and devices that focus on only one type of application function and need to work with other devices such as smartphones, for example, various smart bands, or smart jewelry for monitoring physical signs.

In embodiments of this application, an apparatus configured to implement a function of the terminal device may be a terminal device, or may be an apparatus that can support the terminal device in implementing the function, such as a chip system. The apparatus may be mounted in the terminal device or used together with the terminal device. In embodiments of this application, the chip system may include a chip, or may include a chip and another discrete device. In embodiments of this application, an example in which the apparatus configured to implement the function of the terminal device is a terminal device is merely used for description, and constitutes no limitation on the solutions in embodiments of this application.

The (R)AN is configured to implement access-related functions, and a main function of the (R)AN is to control the terminal device to wirelessly access a mobile communication network. The (R)AN forwards a control signal and user data between the terminal device and the core network. The (R)AN is a part of a mobile communication system, and implements a radio access technology. For example, the (R)AN may be any device having a wireless transceiver function. The device includes but is not limited to a base station (base station), an evolved NodeB (evolved NodeB, eNB, or eNodeB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system; or may be a gNB or a transmission point (TRP or TP) in a 5G system, for example, an NR system, and one or a group of antenna panels (including a plurality of antenna panels) in a base station in a 5G system; or may be a network node that forms a gNB or a transmission point, for example, a baseband unit (BBU) or a distributed unit (distributed unit, DU); or may be a next-generation base station in a 6th generation (6th generation, 6G) mobile communication system, a base station in a future mobile communication system, an access node in a Wi-Fi system, or the like; or may be a module or unit that completes a part of functions of a base station, for example, may be a central unit (central unit, CU), or may be a distributed unit (distributed unit, DU).

In some deployments, a gNB may include a central unit (central unit, CU) and a DU. The gNB may further include a radio frequency unit (radio unit, RU). The CU implements a part of functions of the gNB, and the DU implements a part of functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer is eventually converted into information at the physical layer, or is converted from information at the physical layer. Therefore, in this architecture, higher layer signaling, for example, RRC layer signaling, may also be considered as being sent by the DU or sent by the DU and the CU. It may be understood that the network device may be a CU node, a DU node, or a device including a CU node and a DU node. In addition, the CU may be classified into a network device in a RAN, or the CU may be classified into a network device in a core network (core network, CN). This is not limited in this application.

The terminal device and the (R)AN each may be deployed on land, including an indoor or outdoor device, a handheld device, or a vehicle-mounted device; may be deployed on the water; or may be deployed on an airplane, a balloon, or an artificial satellite in the air. An application scenario of the terminal device and the (R)AN is not limited in embodiments of this application.

The terminal device and the (R)AN may communicate with each other over a licensed spectrum, or may communicate with each other over an unlicensed spectrum, or may communicate with each other over both a licensed spectrum and an unlicensed spectrum; and may communicate with each other over a spectrum below 6 gigahertz (gigahertz, GHz), or may communicate with each other over a spectrum above 6 GHz, or may communicate with each other over a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing terminal application scenarios such as a smart grid, industrial control, intelligent transportation, and a smart city. A function of the terminal may be performed by a module (for example, a chip or a modem) in the terminal, or may be performed by an apparatus including the function of the terminal.

The core network is responsible for maintaining subscription data in a wireless mobile network, and providing functions such as session management, mobility management, policy management, and security authentication for the terminal device. The core network includes but is not limited to one or more of the following network elements: a user plane function (user plane function, UPF) network element, an access and mobility management function (access and mobility management function, AMF) network element, a session management function (session management function, SMF) network element, a unified data management (unified data management, UDM) network element, a network exposure function (network exposure function, NEF) network element, a policy control function (policy control function, PCF) network element, a network repository function (network repository function, NRF) network element, a network slice selection function (network slice selection function, NSSF) network element, and an authentication server function (authentication server function, AUSF) network element. Optionally, the network architecture further includes a network data analytics function (network data analytics function, NWDAF) network element and an application function (application function, AF) network element.

The user plane network element is a gateway for communication between the wireless mobile network and the data network (data network, DN), and is mainly responsible for forwarding and receiving data of the terminal device. For example, the user plane network element may receive data for the terminal device from the data network, and then transmit the data to the terminal device via an access network device; or may receive data from the terminal device via an access network device, and forward the data to the data network. In addition, the user plane network element further includes user plane-related functions such as data packet detection, service usage reporting, quality of service (quality of service, QoS) processing, lawful interception, uplink data packet detection, and downlink data packet storage. In 5G, the user plane network element may be the UPF network element. In future communication, for example, 6G, the user plane network element may still be the UPF network element, or may have another name. This is not limited in this application.

The access and mobility management function network element is mainly responsible for mobility management in the wireless mobile network, for example, location update of a terminal device, network registration of the terminal device, switching of the terminal device, temporary user identity allocation, and authentication and authorization of the terminal device. In 5G, the access and mobility management function network element may be the AMF network element. In future communication, for example, the 6th generation (the 6th generation, 6G), the mobility management network element may still be the AMF network element, or may have another name. This is not limited in this application.

The session management network element is responsible for managing a protocol data unit (protocol data unit, PDU) session of the terminal device. The PDU session is a channel configured to transmit a PDU, and the terminal device and a DN need to transmit the PDU to each other by using the PDU session. The SMF network element is responsible for establishment, maintenance, deletion, and the like of the PDU session. The session management network element includes session-related functions such as session management (for example, session establishment, modification, and release, including tunnel maintenance between the user plane network element and the access network device), selection and control of the user plane network element, service and session continuity (service and session continuity, SSC) mode selection, and roaming. In 5G, the session management network element may be the SMF network element. In future communication, for example, 6G, the session management network element may still be the SMF network element, or may have another name. This is not limited in this application.

The unified data management network element is responsible for storing information such as a subscriber permanent identifier (subscriber permanent identifier, SUPI), a credential (credential), a security context (security context), and subscription information of a subscriber. The information stored by the unified data management network element may be used for authentication and authorization for accessing the wireless mobile network by the terminal device. In 5G, the unified data management network element may be the UDM network element. In future communication, for example, 6G, the unified data management network element may still be the UDM network element, or may have another name. This is not limited in this application.

The unified data repository network element is responsible for performing a function of accessing subscription data, policy data, application data, and other types of data. In 5G, the unified data repository network element may be the UDR network element. In future communication, for example, 6G, the unified data repository network element may still be the UDR network element, or may have another name. This is not limited in this application.

The network exposure network element securely exposes an external interface of the wireless mobile network to a third party. When the session management network element needs to communicate with a third-party network element, the network exposure network element may serve as a relay for communication between the session management network element and the third-party network element. When the network exposure network element serves as the relay, the network exposure network element may translate identification information of the subscriber and identification information of the third-party network element. For example, when sending a SUPI of the subscriber from the wireless mobile network to the third party, the network exposure network element may translate the SUPI into an external identity (identity or identifier, ID) corresponding to the SUPI. On the contrary, when sending an external ID (an ID of the third-party network element) to the wireless mobile network, the network exposure network element may translate the external ID into the SUPI. In 5G, the network exposure network element may be the NEF network element. In future communication, for example, 6G, the network exposure network element may still be the NEF network element, or may have another name. This is not limited in this application.

The policy control network element is configured to provide a policy of the PDU session for the session management network element. Policies may include a charging-related policy, a QoS-related policy, an authorization-related policy, and the like. In 5G, the policy control network element may be the PCF network element. In future communication, for example, 6G, the policy control network element may still be the PCF network element, or may have another name. This is not limited in this application.

The network repository function network element may be configured to: provide a network element discovery function, and provide, based on a request of another network element, network element information corresponding to a network element type. The network repository function network element further provides a network element management service, for example, network element registration, update, and de-registration, and network element status subscription and push. In 5G, the network repository function network element may be the NRF network element. In future communication, for example, 6G, the network repository function network element may still be the NRF network element, or may have another name. This is not limited in this application.

The network data analytics function network element may provide network data collection and analytics functions based on technologies such as big data and artificial intelligence. In 5G, the network data analytics function network element may be the NWDAF network element. In future communication, for example, 6G, the network data analytics function network element may still be the NWDAF network element, or may have another name. This is not limited in this application.

The application function network element is configured to transfer a requirement of an application side for a network side, for example, a QoS requirement or a user status event subscription. The application function network element may be a third-party functional entity, or may be an operator-deployed application server, for example, an IP multimedia subsystem (IP multimedia subsystem, IMS) voice call service. In 5G, the application function network element may be the AF network element. In future communication, for example, 6G, the application function network element may still be the AF network element, or may have another name. This is not limited in this application.

A plurality of services may be deployed on the DN, to provide services such as a data service and/or a voice service for the terminal device. For example, the DN is a private network of an intelligent factory, a sensor mounted in a workshop of the intelligent factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

The AF network element, the UDM network element, the UDR network element, the PCF network element, the SMF network element, the AMF network element, the NRF network element, the AUSF network element, the NEF network element, the UPF network element, and the NWDAF network element may also be respectively referred to as an AF, a UDM, a UDR, a PCF, an SMF, an AMF, an NRF, an AUSF, an NEF, a UPF, and an NWDAF for short, as shown in FIG. 1.

In FIG. 1, Nausf, Nnef, Nnrf, Namf, Npcf, Nsmf, Nudm, Nudr, Naf, and Nnwdaf are respectively service-based interfaces provided by the AUSF, the NEF, the NRF, the AMF, the PCF, the SMF, the UDM, the UDR, the AF, and the NWDAF, and are used to invoke corresponding service-based operations. N1, N2, N3, N4, and N6 are interface sequence numbers. Meanings of the interface sequence numbers are as follows:
(1) N1 is an interface between the AMF and the terminal device, and may be configured to transfer non-access stratum (non-access stratum, NAS) signaling (for example, including a QoS rule from the AMF) and the like to the terminal device.
(2) N2 is an interface between the AMF and the access network device, and may be configured to transfer radio bearer control information and the like from a core network side to the access network device.
(3) N3 is an interface between the access network device and the UPF, and is mainly configured to transfer uplink and downlink user plane data between the access network device and the UPF.
(4) N4 is an interface between the SMF and the UPF, and may be configured to transfer information between a control plane and a user plane, including delivering a forwarding rule, a QoS rule, a traffic statistics rule, and the like from the control plane to the user plane, and reporting user plane information.
(5) N6 is an interface between the UPF and the DN, and is configured to transfer uplink and downlink user data flows between the UPF and the DN.

A mobile network operator (mobile network operator, MNO) may deploy a network to provide a mobile communication service for a terminal device. Energy consumption is generated when the network serves the terminal device. Energy consumption costs are an important part of operating costs of the MNO, and excessively high energy consumption also has adverse impact on an environment. Therefore, how to determine the energy consumption generated when the network serves the terminal device becomes an urgent technical problem to be resolved.

Currently, a method for determining the energy consumption generated when the network serves the terminal device is as follows: A network element 1 in the network receives a request 1, where the request 1 is used to request the energy consumption generated by the network for serving the terminal device; and in response to the request 1, the network element 1 determines network elements serving the terminal device in the network, and then requests the network elements to provide energy consumption-related information, so as to determine, based on the energy consumption information provided by the network elements, the energy consumption generated by the network for serving the terminal device.

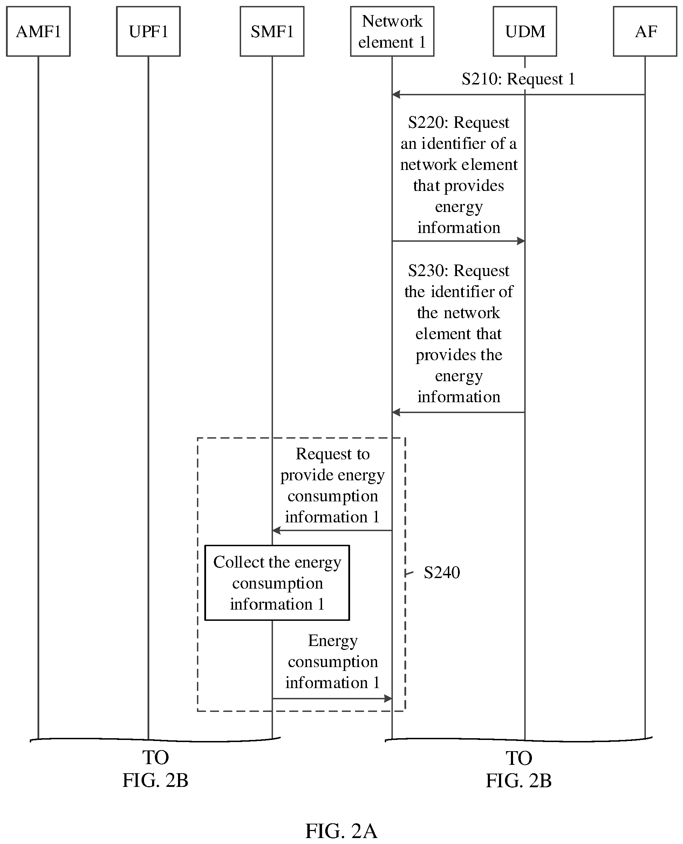

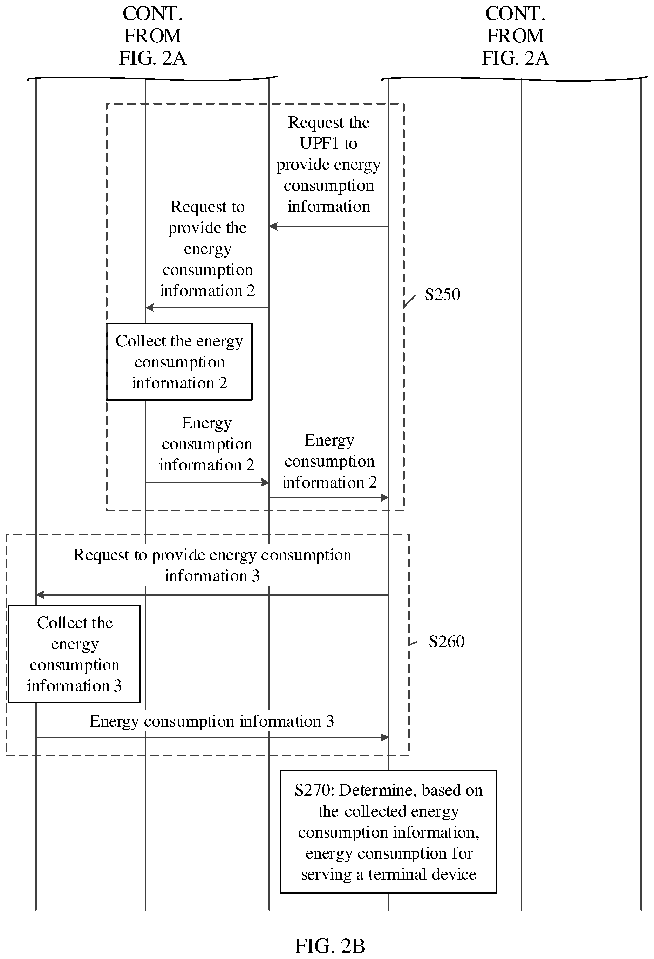

For example, FIG. 2A and FIG. 2B are a diagram of an existing method for determining energy consumption generated by a network for serving a terminal device. As shown in FIG. 2A and FIG. 2B, the method includes the following steps.

S210: An AF network element sends a request 1 to a network element 1, and the network element 1 receives the request 1 from the AF network element.

The request 1 is used to request the network element 1 to feed back the energy consumption generated when the network serves the terminal device.

For example, the AF network element directly sends the request 1 to the network element 1, or the AF network element sends the request 1 to the network element 1 via an NEF network element.

Optionally, the method 200 further includes: The network element 1 sends a response message to the AF network element, where the response message indicates that a request of the AF network element is accepted. In other words, the response message may be understood as an acknowledgment message. S220: The network element 1 requests, from a UDM network element in response to receiving the request 1, a network element that provides energy consumption information.

The energy consumption information is used by the network element 1 to determine the energy consumption. The network element 1 may be considered as an energy consumption information collection network element, and is configured to process energy consumption information to obtain the energy consumption generated by the network for serving the terminal device. In other words, the network element 1 may also be understood as a network element for calculating/determining energy consumption. The network element 1 may also be referred to as an NWDAF network element, a management data analytics function (management data analytics function, MDAF) network element, or the like. This is not limited in this application. Optionally, the network element 1 may be an independent network element, or may be an energy-related function in a network element.

In an implementation, the network element 1 invokes an Nudm_UECM service to request, from the UDM network element, a network element that provides energy consumption-related information.

S230: The UDM network element feeds back, to the network element 1 in response to the request of the network element 1, an ID of the network element that provides the energy consumption information.

For example, network elements that provide energy consumption information and that are fed back by the UDM network element to the network element 1 include an SMF1 network element, a UPF1 network element, and an AMF1 network element. The UPF1 network element is managed by the SMF1 network element.

S240: The network element 1 requests the SMF1 network element to provide energy consumption information 1, and correspondingly, the SMF1 network element sends the energy consumption information 1 to the network element 1 in response to the request.

The energy consumption information 1 is related to data of the terminal device transmitted by the SMF1 network element. It may be understood that the energy consumption information 1 is information related to energy consumption for the SMF1 network element to transmit the data of the terminal device.

S250: The network element 1 requests, via the SMF1 network element, the UPF1 network element to provide energy consumption information 2, and correspondingly, the UPF1 network element sends the energy consumption information 2 to the network element 1 in response to the request.

The energy consumption information 2 is related to data of the terminal device transmitted by the UPF1 network element. It may be understood that the energy consumption information 2 is information related to energy consumption for the UPF1 network element to transmit the data of the terminal device.

For example, the energy consumption information 2 provided by the UPF1 network element includes a data volume and a bit rate in a process of serving the terminal device.

S260: The network element 1 requests the AMF1 network element to provide energy consumption information 3, and correspondingly, the AMF1 network element sends the energy consumption information 3 to the network element 1 in response to the request.

The energy consumption information 3 is related to signaling of the terminal device transmitted by the AMF1 network element. It may be understood that the energy consumption information 3 is information related to energy consumption for the AMF1 network element to transmit the signaling of the terminal device.

S270: The network element 1 determines, based on the collected energy consumption information, the energy consumption generated by serving the terminal device.

Optionally, after determining the energy consumption generated by serving the terminal device, the network element 1 sends the energy consumption to an AMF network element. For example, the network element 1 directly sends the energy consumption to the AF network element, or the network element 1 sends the energy consumption to the AF network element via the NEF network element.

However, in a current process in which the network element 1 collects the energy consumption information, a network element serving the terminal device may change, so that the energy consumption determined by the network element 1 is inaccurate. FIG. 2A and FIG. 2B are used as an example. The AMF network element serving the terminal device may be switched from the AMF1 network element to the AMF2 network element. However, according to the method shown in FIG. 2A and FIG. 2B, the network element 1 fails to collect energy consumption information of the AMF2, and consequently, the energy consumption determined by the network element 1 is inaccurate.

In view of this, an embodiment of this application provides a communication method, to more accurately determine energy consumption generated by a network for serving a terminal device.

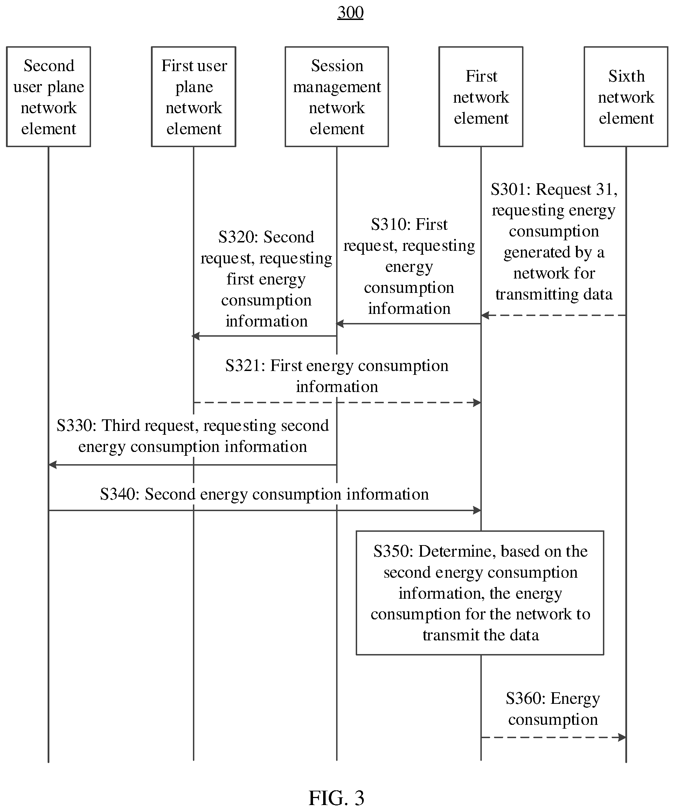

FIG. 3 is a schematic flowchart of a communication method 300 according to an embodiment of this application. The method 300 may be applied to the system architecture shown in FIG. 1, but this is not limited in embodiments of this application.

The communication method 300 may be performed by a first network element, a session management network element, a first user plane network element, or a second user plane network element, or may be performed by a module and/or a component (for example, a chip or an integrated circuit) that are/is mounted in a first network element, a session management network element, a first user plane network element, or a second user plane network element and that have/has a corresponding function. This is not limited in this application. For ease of description, the following provides descriptions by using an example in which the first network element, the session management network element, the first user plane network element, and the second user plane network element are execution bodies. As shown in FIG. 3, the method includes the following steps.

S310: The first network element sends a first request to the session management network element, and correspondingly, the session management network element receives the first request from the first network element, where the first request is used to request energy consumption information, the energy consumption information is used to determine energy consumption for a network to transmit data, and the data includes first data of a session.

In this embodiment, the first network element is a network element that collects energy consumption information and obtains, based on the collected energy consumption information, energy consumption generated by the network for transmitting the data. Therefore, the first network element may also be referred to as an energy consumption network element. The first network element may be, for example, a network element in the core network in FIG. 1, for example, a management data analytics function (management data analytics function, MDAF) network element or a network data analytics function (network data analytics function, NWDAF) network element. Alternatively, the first network element may be an added network element. For example, the added network element may be referred to as an energy consumption network element or an energy consumption information collection network element. The first network element may be independently disposed, or may be disposed together with another network element, for example, disposed together with a PCF network element or an SMF network element. This is not limited in embodiments of this application. For ease of description, the data is denoted as data #1 below.

It may be understood that the energy consumption information in this embodiment is merely an example of a name, and a specific name does not constitute a limitation on this embodiment. A function of the information is mainly used by the first network element to determine the energy consumption generated when the network transmits the data #1. For example, the energy consumption information may also be referred to as energy information, energy consumption-related information, energy-related information, or the like.

In this embodiment, when the first network element determines the energy consumption for the network to transmit the data #1, the data #1 includes the first data of the session. The session is denoted as a session #1 below. It may be understood that data of the session #1 is the first data.

A manner of triggering the first network element to determine the energy consumption for the network to transmit the data is not limited in embodiments. For example, the first network element triggers, in response to receiving a request #31, determining the energy consumption for the network to transmit the data. For example, before step S310, the communication method 300 further includes S301: A sixth network element sends the request #31 to the first network element, and correspondingly, the first network element receives the request #31 from the sixth network element.

The sixth network element may be, for example, an application function (application function, AF) network element, or may be a policy control function (policy control function, PCF) network element. This is not limited in embodiments.

The request #31 is used to request the energy consumption generated by the network for transmitting the data #1. In other words, the request #31 is used to request the first network element to feed back the energy consumption generated by the network for transmitting the data #1. The request #31 is, for example, referred to as an energy consumption exposure request, and the sixth network element is, for example, referred to as an energy consumption requester. It may be understood that the energy consumption requested by the sixth network element is different from the energy consumption information requested by the first network element in S310, and the first network element obtains the energy consumption information and then determines the energy consumption based on the obtained energy consumption information.

For example, when the request #31 is used to request the energy consumption generated by the network for transmitting the data #1, the request #31 includes an identifier of the terminal device and/or an identifier of the session #1. Correspondingly, after receiving the request #31, the first network element determines, based on whether the request #31 includes the identifier of the terminal device or the identifier of the session, a granularity of the requested energy consumption. The granularity may be a terminal device or a session of a terminal device.

For example, when the request #31 includes the identifier of the terminal device, it indicates that a granularity of the energy consumption requested by the request #31 is a terminal device. In this case, the energy consumption requested by the request #31 is considered to indicate energy consumption for the network to transmit data of the terminal device. In other words, the data #1 may be considered as the data of the terminal device. It may be understood that, in this case, the session #1 is a session of the terminal device. For another example, when the request #31 includes the identifier of the session #1, it indicates that a granularity of the energy consumption requested by the request #31 is a session. In this case, the energy consumption requested by the request #31 is considered to indicate energy consumption for the network to transmit the data of the session #1. A granularity of the data #1 may alternatively be another granularity, for example, a quality of service flow. This is not limited in embodiments of this application.

Optionally, the request #31 includes information 1, and the information 1 indicates that granularity information 1 of the requested energy consumption may be a bit or a character string. For example, when a value of the information 1 is 0, the information 1 indicates that the granularity of the energy consumption is the terminal device; or when a value of the information 1 is 1, the information 1 indicates that the granularity of the energy consumption is the session of the terminal device.

Optionally, the request #31 further includes information 2, and the information 2 indicates a mode in which the first network element feeds back the energy consumption to the sixth network element. The mode may be periodic. In this case, the request #31 may further include information indicating a period in which the first network element feeds back the energy consumption, for example, every hour, every day, or every month. When the mode is periodic, and the first network element receives the request #31, the first network element may determine, based on the information 2, that the request #31 is a subscription-type request. In other words, the first network element determines, based on the information 2, that the sixth network element requests to feed back the energy consumption in a subscription manner.

"Feed back" in this embodiment may be replaced with reporting or sending.

After the first network element receives the request #31, the first network element determines, based on the request #31, that the energy consumption generated by the network for transmitting the data #1 needs to be calculated. Because the data #1 includes the data of the session #1, it is determined that a user plane network element transmitting the data of the session #1 needs to provide energy consumption information. Therefore, the first network element sends the first request to the session management network element, to request the user plane network element transmitting the data of the session #1 to provide the energy consumption information. In other words, it may be understood that, although the first request herein is sent to the session management network element, the first request is used to request the energy consumption information in a case in which the user plane network element transmits the data of the session #1. The energy consumption information may be used by the first network element to determine energy consumption (or referred to as an energy consumption value) generated when the user plane network element transmits the data of the session #1. In this embodiment, the user plane network element transmitting the data of the session #1 is also referred to as the user plane network element serving data transmission of the session #1 or the user plane performing data transmission of the session #1.

For example, the session management network element is an SMF network element in the 5G network, and the user plane network element is a UPF network element in the 5G network.

For example, when the information 1 in the request #31 indicates that the granularity of the energy consumption is the terminal device, a session management network element determined by the first network element is a session management network element transmitting data of one or more sessions of the terminal device. For another example, when the information 1 in the request #31 indicates that the granularity of the energy consumption is the session, a session management network element determined by the first network element is a session management network element transmitting the data of the session #1. For a specific implementation in which the first network element determines the session management network element, refer to the conventional technology. For example, the first network element obtains, from a UDM network element, identification information or address information of the session management network element transmitting the data of the session #1, or the first network element may determine the session management network element in another manner. This is not limited in embodiments of this application.

Optionally, when sending the first request to the session management network element, the first network element may include the identification information of the terminal device in the first request, to indicate, to the session management network element, a terminal device corresponding to the requested energy consumption information. For example, the first network element includes, in the first request, the identifier of the terminal device in the request #31.

Optionally, the first request sent by the first network element to the session management network element is a subscription-type request. In other words, the first request is used to request to subscribe to the energy consumption information. For example, when the request #31 is the subscription-type request, the first request sent by the first network element to the session management network element is the subscription-type request.

S320: The session management network element sends a second request to the first user plane network element based on the first request, and correspondingly, the first user plane network element receives the second request from the session management network element, where the second request is used to request information related to energy consumption for the first user plane network element to transmit the first data.

In this embodiment, after receiving the first request, the session management network element sends, based on the first request, the second request to the first user plane network element transmitting the first data, to request, from the first user plane network element, the information related to the energy consumption for the first user plane network element to transmit the first data. The first user plane network element transmitting the first data may also be referred to as a first user plane network element serving the session #1. Information related to energy consumption for the first user plane network element to transmit the data of the session #1 is also referred to as first energy consumption information below. In other words, the first energy consumption information is related to the energy consumption generated by the first user plane network element for transmitting the data of the session #1.

In this embodiment, that the second request is used to request the information related to the energy consumption for the first user plane network element to transmit the first data may also be explained as any one of the following: (1) The second request is used to request information that affects the energy consumption for the first user plane network element to transmit the data of the session #1. (2) The second request is used to request the first energy consumption information, where the first energy consumption information is related to the energy consumption for the first user plane network element to transmit the data of the session #1. (3) The second request is used to request the first energy consumption information, where the first energy consumption information indicates/represents/describes a feature of transmitting the data of the session #1 by the first user plane network element.

For example, the first energy consumption information includes at least one of the following: a rate at which the first user plane network element transmits the data of the session #1, or a data volume of the data of the session #1 transmitted by the first user plane network element.

In an implementation, the first request includes information used to identify the first user plane network element. In this case, the session management network element sends the second request to the first user plane network element based on the information used to identify the first user plane network element.

For example, the first network element determines, based on the request #31, that the user plane network element transmitting the data of the session #1 is the first network element. For example, the first network element obtains, from the UDM network element, the first user plane network element transmitting the data of the session #1, and then includes the information used to identify the first user plane network element in the first request. For example, the information used to identify the first user plane network element is an instance identifier (instance ID) of the first user plane network element or address information of the first user plane network element. The address information of the first user plane network element is, for example, a uniform resource locator (uniform resource locator, URL) address of the first user plane network element, or internet protocol (Internet Protocol, IP) address information of the first user plane network element.

In another implementation, the session management network element determines the first user plane network element based on the first request, and further sends the second request to the first user plane network element.

For example, the first request includes information about the session #1, and the session management network element obtains an identifier or address information of the first user plane network element based on the information about the session #1. The information about the session #1 is, for example, information such as domain network name (domain network name, DNN) information or a quality of service flow identifier (quality of service flow identifier, QFI) of the session #1. For another example, the first request includes the identification information of the terminal device, the session management network element obtains, based on the identification information of the terminal device, the session #1 related to the terminal device, and then determines a user plane network element serving the session #1 as the first user plane network element. In addition, the session management network element may alternatively determine the first user plane network element based on other information in the first request.

In this embodiment, when the session management network element sends the second request to the first user plane network element, the second request includes information about the session #1. Correspondingly, the first user plane network element associates a data packet of the session #1 based on the information about the session #1, to collect statistics on energy consumption information during transmission of the data of the session #1.

Optionally, the second request includes information used to identify the first network element, and the information is used by the first user plane network element to determine an address for feeding back the first energy consumption information. For example, the information used to identify the first network element may be a uniform resource locator (uniform resource locator, URL) address of the first network element.

Optionally, the session management network element may send the information used to identify the first user plane network element to the first network element, so that the first network element learns that when determining the energy consumption for the network to transmit the data, the first network element further needs to collect statistics on energy consumption generated by the first user plane network element.

Optionally, the second request sent by the session management network element to the first user plane network element is a subscription-type request. In other words, the second request is used to request to subscribe to the first energy consumption information. For example, when the first request is the subscription-type request, the second request sent by the session management network element to the first user plane network element is the subscription-type request.

S330: The session management network element sends, in response to updating, from the first user plane network element to the second user plane network element, a user plane network element transmitting the first data, or in response to inserting the second user plane network element to transmit the first data, a third request to the second user plane network element, where the third request is used to request information related to energy consumption for the second user plane network element to transmit the first data.

That the session management network element sends, in response to updating, from the first user plane network element to the second user plane network element, a network element transmitting the data of the session #1, or in response to inserting the second user plane network element to transmit the data of the session #1, the third request to the second user plane network element may alternatively be explained as that the session management network element sends the third request to the second user plane network element when the user plane network element transmitting the data of the session #1 is updated from the first user plane network element to the second user plane network element or the second user plane network element is inserted to transmit the data of the session #1.

That the session management network element responds to updating, from the first user plane network element to the second user plane network element, the user plane network element transmitting the first data (namely, the data of the session #1) may alternatively be explained as that the session management network element responds to changing, from the first user plane network element to the second user plane network element, the user plane network element transmitting the first data; or may be explained as that the session management network element responds to switching, from the first user plane network element to the second user plane network element, the user plane network element transmitting the first data.

That the session management network element responds to inserting the second user plane network element to transmit the first data may alternatively be explained as that the session management network element responds to adding the second user plane network element to the user plane network element transmitting the first data; or may be explained as that the session management network element responds to allocating the second user plane network element to transmit the first data.

It may be understood that, regardless of whether the network element transmitting the first data is updated from the first user plane network element to the second user plane network element or the second user plane network element is inserted to transmit the first data, it may be considered that a new user plane network element transmits the first data or a new user plane network element serves the session #1. Therefore, both of the foregoing two cases may be explained as that the second user plane network element is added to transmit the data of the session #1.

For example, due to movement of the terminal device, a service scope of the first user plane network element cannot cover a location of the terminal device after movement, and a service scope of the second user plane network element includes the location of the terminal device after movement. Therefore, the session management network element selects the second user plane network element as an intermediate user plane network element (for example, an intermediate user plane function (intermediate UPF, I-UPF)) network element, to transmit the data of the session #1 between the terminal device and the first user plane network element. In other words, the session management network element determines to transmit the data of the session #1 via the second user plane network element.

For another example, due to network optimization, a route for transmitting the data of the session #1 is modified, and the second user plane network element is added as an intermediate user plane network element to transmit the data of the session #1.

For another example, the session management network element determines that the first user plane network element is replaced with the second user plane network element as an anchor user plane network element for transmitting the data of the session #1. For example, in a mobile edge computing (mobile edge computing, MEC) scenario, to reduce an end-to-end latency of data transmission, the session management network element determines the second user plane network element (which may be referred to as a local user plane network element) that is close to the terminal device as an anchor user plane network element.

An implementation in which the session management network element determines the second user plane network element is not limited in embodiments. For example, in an implementation, addition of reduction of the user plane network element transmitting the data of the session #1 may trigger a modification procedure of the session #1. In the modification procedure of the session #1, the session management network element receives a notification of updating of the user plane network element. Therefore, the session management network element may determine the second user plane network element.

In this embodiment, when the second user plane network element is added to transmit the data of the session #1, the session management network element sends the third request to the second user plane network element, where the third request is used to request information related to energy consumption for the second user plane network element to transmit the data of the session #1. In this embodiment, the information related to the energy consumption for the second user plane network element to transmit the data of the session #1 (namely, the first data) is also referred to as second energy consumption information. In other words, the second energy consumption information is related to the energy consumption generated by the second user plane network element for transmitting the data of the session #1.

In this embodiment, that the third request is used to request the information related to the energy consumption for the second user plane network element to transmit the first data may also be explained as any one of the following: (1) The third request is used to request information that affects the energy consumption for the second user plane network element to transmit the data of the session #1. (2) The third request is used to request the second energy consumption information, where the second energy consumption information is related to the energy consumption for the second user plane network element to transmit the data of the session #1. (3) The third request is used to request the second energy consumption information, where the second energy consumption information indicates/represents/describes a feature of transmitting the first data by the second user plane network element.

For example, the second energy consumption information includes at least one of the following: a rate at which the second user plane network element transmits the first data, or a data volume of the first data.

For example, the session management network element determines whether there is a historical first request (whether the first request has been received), and when there is the historical first request, the session management network element sends the third request to the second user plane network element, that is, the session management network element sends the third request to the second user plane network element based on the received first request.

In an implementation, that the session management network element sends the third request to the second user plane network element based on the received first request includes: The session management network element sends the third request to the second user plane network element when the energy consumption information requested by the first request is related to the first data (namely, the data of the session #1).

For example, after receiving the first request, the session management network element stores a relationship between the first request and the session #1. When the user plane network element transmitting the data of the session #1 serves as the added second user plane network element, it is determined, based on the relationship between the first request and the session #1, that the first request is related to the data of the session #1. In this case, the session management network element sends the third request to the second user plane network element.

For another example, the session #1 corresponds to a flag #1, and an initial value of the flag #1 is 0. After receiving the first request, the session management network element updates the value of the flag #1 to 1, indicating that the corresponding first request is received. When the user plane network element transmitting the data of the session #1 is updated, the session management network element sends the third request to the second user plane network element based on the value 1 of the flag #1.

In another implementation, after receiving the first request, the session management network element starts a corresponding timer. Then, when the second user plane network element is added to transmit the data of the session #1, if the timer does not expire, the session management network element sends the third request to the second user plane network element. For example, when the user plane network element transmitting the data of the session #1 is updated from the first user plane network element to the second user plane network element and the timer does not expire, the session management network element sends the third request to the second user plane network element; or when the second user plane network element is inserted to transmit the data of the session #1 and the timer does not expire, the session management network element sends the third request to the second user plane network element. For example, after receiving the first request, the session management network element starts the timer whose timing duration is 10 ms. If within 10 ms, the user plane network element transmitting the data of the session #1 is updated from the first user plane network element to the second user plane network element or the second user plane network element is inserted to transmit the data of the session #1, the session management network element sends the third request to the second user plane network element. Duration of the timer may be specified in a protocol, or may be preconfigured in the session management network element, or may be carried in the first request. This is not limited in embodiments of this application.

Alternatively, after receiving the first request, the session management network element starts a timer, where an initial value of the timer is 0. If a value of the timer does not exceed a first threshold when the user plane network element is updated or the second user plane network element is inserted, the session management network element sends the third request to the second user plane network element. The first threshold may be defined in a protocol, preconfigured, or received by the session management network element from another network element. For example, the first request includes the first threshold. The initial value of the timer may alternatively be another value. This is not limited in embodiments. For example, the initial value may be defined in a protocol, preconfigured, or received by the session management network element from another network element. For example, the first request includes the initial value.

Optionally, the session management network element may further determine, based on a local configuration or another policy, to send the third request to the second user plane network element. This is not limited in embodiments of this application.

Optionally, when the second user plane network element is added, the session management network element may send, to the first network element, information used to identify the second user plane network element. In this way, the first network element determines, based on the information, that energy consumption generated when the second user plane network element transmits the first data further needs to be calculated. For example, the information used to identify the second user plane network element may be an instance identifier (instance ID) of the second user plane network element or address information of the second user plane network element, and the address information of the second user plane network element may be a uniform resource locator (uniform resource locator, URL) address of the second user plane network element. It should be noted herein that, when the session management network element sends, to the second user plane network element, the information used to identify the second user plane network element, a sequence in which the session management network element sends, to the first network element, the information used to identify the second user plane network element and sends the third request to the second user plane network element is not limited in embodiments. Alternatively, when the second user plane network element sends the second energy consumption information to the first network element via the session management network element, after receiving the second energy consumption information from the second user plane network element, the session management network element may send the second energy consumption information and the information used to identify the second user plane network element together to the first network element.

Optionally, when the session management network element sends the third request to the second user plane network element to request the second energy consumption information, the session management network element sends first information to the second user plane network element, where the first information indicates a moment at which the second user plane network element sends the second energy consumption information. Optionally, the first information is carried in the third request. Optionally, that the first information indicates the moment at which the second user plane network element sends the second energy consumption information may also be explained as that the first information indicates time information for the second user plane network element to send the second energy consumption information.

For example, the first information indicates the remaining time in a current reporting period. For example, when a reporting mode of the energy consumption information is periodic, and the reporting period is two hours, the first information indicates the remaining one hour.

For another example, the first information indicates start time of a current reporting period, and the first user plane network element may determine, based on the reporting period and the start time of the current reporting period, time for reporting the second energy consumption information. For example, if the first information indicates that the current reporting period starts from 9:35, and the reporting period is two hours, the first user plane network element reports the second energy consumption information at 11:35.

For another example, the first information indicates time for reporting the second energy consumption information, and the first user plane network element reports the second energy consumption information at the time indicated by the first information.

S340: The second user plane network element sends the second energy consumption information to the first network element in response to the third request.

In this embodiment, after receiving the third request, the second user plane network element determines a time period for collecting statistics on the second energy consumption information. In other words, the second energy consumption information determined by the second user plane network element is related to energy consumption generated when the second user plane network element transmits the data of the session #1 in the time period. For example, the second energy consumption information includes one or both of the following information: a data volume of the data of the session #1 transmitted by the second user plane network element in the time period, and a rate at which the second user plane network element transmits the data of the session #1 in the time period. Optionally, the second energy consumption information further includes a total data volume of data of all sessions transmitted by the second user plane network element in the time period.

For example, the second user plane network element may determine the time period based on the first information. For example, if the reporting period is two hours, and the first information indicates remaining one hour, after receiving the third request and the first information, the second user plane network element collects statistics on the second energy consumption information in the remaining one hour. For another example, if the reporting period is two hours, and the first information indicates that the current reporting period starts from 8:00, the second user plane network element determines that the time for reporting the second energy consumption information is 10:00. Because time at which the second user plane network element starts to transmit the data of the session #1 is 9:00, the second user plane network element collects statistics on the second energy consumption information in a time period between 9:00 and 10:00. For another example, the first information indicates that reporting is performed at 10:00, time at which the second user plane network element starts to transmit the data of the session #1 is 9:00, and the second user plane network element collects statistics on the second energy consumption information in a time period between 9:00 and 10:00, for example, a data volume of the data of the session #1 transmitted in the time period between 9:00 and 10:00.

It should be noted herein that the foregoing reporting period is two hours, and each number is merely an example, and does not constitute a limitation on embodiments.

Optionally, after the second user plane receives the third request sent by the session management network element, the communication method 300 further includes: The second user plane network element determines sending time or the reporting period of the second energy consumption information.

For example, the sending time or the reporting period of the second energy consumption information determined by the second user plane network element is reporting time and/or a reporting period that are/is indicated by the third request.

For another example, the second user plane network element re-determines a reporting period of the second energy consumption information based on the reporting period indicated by the third request and a reporting period of another task that needs to be periodically reported. For example, the third request is used to request energy consumption information of the session #1, and the third request indicates that the reporting period is every M hours. In addition, the second user plane network element further receives a request #A, where the request #A is used to request energy consumption information of a session #2, and the request #A indicates that a reporting period is every N hours. The second user plane network element may determine a period for sending the second energy consumption information as a greatest common divisor of M and N. Optionally, when the greatest common divisor of M and N is different from M or N, the second user plane network element may send indication information 1 to the first network element, where the indication information 1 indicates updating of the reporting period. For example, when the greatest common divisor of M and N is different from M, the indication information 1 indicates that a reporting period corresponding to a request for the session #1 is updated to the greatest common divisor of M and N. When sending the indication information 1 to the first network element, the second user plane network element may further send identification information of the session #1 to the first network element, or send event identification information (event ID) to the first network element, where the event identification information is used to trigger an event in which the first network element requests energy consumption information corresponding to the session #1. In this way, the first network element may determine, based on the identification information of the session #1 or the event identification information, that the energy consumption information reporting period corresponding to the energy consumption information request for the session #1 is updated. The identification information of the session or the event identification information may be included in the indication information 1, or may not be included in the indication information 1. The second user plane network element may further send, to the first network element, information indicating a reason for updating the reporting period. For example, the information indicates that the second user plane network element needs to perform energy consumption reporting at a node granularity, or may indicate another reason. Correspondingly, after the first network element receives the information indicating the reason for updating the reporting period sent by the first network element, the first network element may modify subsequent request information based on the indication. For example, the first network element modifies, based on the indication, subsequent information indicating a time period in a request #32 in S350.

In this embodiment, when the second user plane network element sends the second energy consumption information to the first network element in response to the third request, the second user plane network element may first send the second energy consumption information to the session management network element, and correspondingly, after receiving the second energy consumption information, the session management network element indicates the energy consumption information of the second user plane network element to the first network element. That is, the second user plane network element sends the second energy consumption information to the first network element via the session management network element. Optionally, when the session management network element sends an identifier of the second user plane to the first network element, after receiving the second energy consumption information, the session management network element sends the second energy consumption information and the identifier of the second user plane network element together to the first network element.

Alternatively, the second user plane network element may directly send the second energy consumption information to the first network element. For example, when the third request sent by the session management network element includes identification information or address information of the first network element, when feeding back the second energy consumption information in response to the third request, the second user plane network element directly feeds back the second energy consumption information to the first network element based on the identification information or the address information of the first network element. For example, the address information of the first network element may be a URL address, and the second user plane network element feeds back the second energy consumption information to the URL address.

Optionally, when sending the second energy consumption information to the first network element, the second user plane network element may further send the identifier or address information of the second user plane network element to the first network element.

S350: The first network element determines, based on the second energy consumption information, the energy consumption for the network to transmit the data.

For example, in an implementation, the first network element determines, based on the second energy consumption information, the energy consumption generated by the second user plane network element for transmitting the data of the session #1, and then determines, based on the energy consumption generated by the second user plane network element for transmitting the data of the session #1, the energy consumption for the network to transmit the data.

For example, the first network element requests energy consumption of the second user plane network element from the management network element, where the energy consumption of the second user plane network element indicates energy consumption generated by the second user plane network element or indicates energy consumption generated by the second user plane network element for serving one or more slices. Correspondingly, the management network element sends a first response message to the first network element in response to the request, and the first network element receives the first response message, where the first response message includes the energy consumption of the second user plane network element. Then, the first network element determines, based on the energy consumption of the second user plane network element and the second energy consumption information sent by the second user plane network element, the energy consumption generated by the second user plane network element for transmitting the data of the session #1.

For example, when the energy consumption of the second user plane network element is requested from the management network element, the method includes: The first network element sends the request #32 to the management network element, where the request #32 includes the identification information of the second user plane network element, and the request #32 is used to request the energy consumption generated by the second user plane network element. Optionally, the request #32 includes information indicating a time period, to indicate that the request #32 is used to request energy consumption of the second user plane network element in the time period. For example, the information indicating the time period indicates a time period between 9:00 and 10:00, to indicate that energy consumption of the second user plane network element between 9:00 and 10:00 is requested.

Optionally, the first response message may further include a total data volume of data transmitted by the second user plane network element. For example, when the request #32 includes the information indicating the time period, the first response message includes a total data volume of data transmitted by the second user plane network element in the time period.

For example, the energy consumption in this embodiment may be an energy value or energy efficiency. For example, when the energy consumption is an energy value, the energy consumption may be power information such as joule or W.h. When the energy consumption is energy efficiency, the energy consumption may be joule/bit (bit).

Optionally, the energy consumption may also be replaced with carbon emission (for example, 500 grams of carbon dioxide), an amount of renewable energy, a proportion of renewable energy, or the like.

For example, when determining, based on the energy consumption of the second user plane network element and the second energy consumption information sent by the second user plane network element, energy consumed by the second user plane network element for transmitting the data of the session #1, the first network element determines the consumed energy according to the following formula:
Energy consumption generated by the second user plane network element for transmitting the data of the session #1=energy consumption of the second user plane network element×(data volume in the second energy consumption information/total data volume of the second user plane network element; or
energy consumption generated by the second user plane network element for transmitting the data of the session #1=energy consumption of the second user plane network element×(data volume in the second energy consumption information/total data volume of the second user plane network element)×coefficient; or
energy consumption generated by the second user plane network element for transmitting the data of the session #1=energy consumption of the second user plane network element×(data volume in the second energy consumption information/total data volume of the second user plane network element)×coefficient+power consumption constant.

The coefficient may be determined, for example, based on association information of a data rate in the second energy consumption information. For example, the following association information may be configured in the network: When the data rate is greater than or equal to 0 Mbps and less than 100 Mbps, the coefficient is 0.8; when the data rate is greater than or equal to 100 Mbps and less than 500 Mbps, the coefficient is 1.0; when the data rate is greater than or equal to 500 Mbps and less than 800 Mbps, the coefficient is 1.2; or when the data rate is greater than or equal to 800 Mbps and less than 800 Mbps, the coefficient is 1.5. The association information of the data rate may be configured locally in the first network element, or configured in another network element. In an implementation, the first network element may obtain the data rate and the preconfigured association information from the management network element. In addition, the first network element may further obtain the information from another place. This is not uniquely limited in this application.

The power consumption constant may represent a power consumption value obtained by evenly allocating basic power consumption of a user plane network element to the terminal device. For example, between 8:00 and 10:00, basic power consumption of the second user plane network element is 100 W.h, and there are 100 users. In this case, 1 W.h is evenly allocated to each user, that is, the power consumption constant is 1 W.h. The power consumption constant may be determined by the first network element. For example, the first network element determines the corresponding power consumption constant based on a network element type and corresponding information of the basic power consumption that are locally preconfigured. In another implementation, the first network element obtains the corresponding information of the basic power consumption by querying the management network element, to determine the power consumption constant. For example, the management network element notifies that the current basic power consumption of the second user plane network element is 100 W.h, and there are a total of 100 served users. In this case, a second network element calculates the power consumption constant=100 W.h/100=1 W.h.

It can be learned that, in this technical solution, after the user plane network element transmitting the first data is updated from the first user plane network element to the second user plane network element, or after the second user plane network element is inserted to transmit the first data, the session management network element further requests the second user plane network element to provide the second energy consumption information to the first network element, so that the first network element determines, based on the second energy consumption information, the energy consumption for the network to transmit the data. In this way, the determined energy consumption includes the energy consumption generated by the second user plane network element for transmitting the first data, and accuracy is higher.

Optionally, in the communication method 300, after the first user plane network element receives the second request from the session management network element, the communication method 300 may further include the following step:
S321: The first user plane network element sends the first energy consumption information in response to the second request, and correspondingly, the first user plane network element receives the first energy consumption information from the first user plane network element.

For example, the first energy consumption information determined by the first user plane network element includes one or both of the following information: a data volume of the data of the session #1 transmitted by the first user plane network element and a data rate corresponding to the data of the session #1 transmitted by the first user plane network element.

In an implementation, when the first user plane network element sends the first energy consumption information, the first energy consumption information is first sent to the session management network element, and correspondingly, the session management network element receives the first energy consumption information, and then indicates the first energy consumption information of the first user plane network element to the first network element. That is, the first user plane network element sends the first energy consumption information to the first network element via the session management network element. For example, after receiving the first energy consumption information, the session management network element sends the first energy consumption information and the identifier of the first user plane network element to the first network element, to indicate, to the first network element, that the first energy consumption information fed back belongs to the first user plane network element.

In another implementation, when the first user plane network element sends the first energy consumption information, the first user plane network element directly sends the first energy consumption information to the first network element. For example, when the second request sent by the session management network element includes the identification information or the address information of the first network element, when feeding back the first energy consumption information in response to the second request, the first user plane network element may directly feed back the first energy consumption information to the first network element based on the identification information or the address information of the first network element.

Optionally, when directly sending the first energy consumption information to the first network element, the first user plane network element may further send the identifier or address information of the first user plane network element to the first network element.

Optionally, after the first network element receives the first energy consumption information, the first network element requests energy consumption of the first user plane network element from the management network element. Then, the first network element determines, based on the energy consumption of the first user plane network element and the first energy consumption information sent by the first user plane network element, the energy consumption generated by the first user plane network element for transmitting the data of the session #1.

For example, when determining, based on the energy consumption of the first user plane network element and the first energy consumption information sent by the first user plane network element, energy consumed by the first user plane network element for transmitting the data of the session #1, the first network element determines the consumed energy according to the following formula:
Energy consumption generated by the first user plane network element for transmitting the data of the session #1=energy consumption of the first user plane network element×(data volume in the first energy consumption information/total data volume of the first user plane network element); or
energy consumption generated by the first user plane network element for transmitting the data of the session #1=energy consumption of the first user plane network element×(data volume in the first energy consumption information/total data volume of the first user plane network element)×coefficient; or
energy consumption generated by the first user plane network element for transmitting the data of the session #1=energy consumption of the first user plane network element×(data volume in the first energy consumption information/total data volume of the first user plane network element)×coefficient+power consumption constant.

For descriptions of the coefficient, refer to the description in step S350. Details are not described herein again.

Optionally, the first network element determines, based on the energy consumption generated by the first user plane network element for transmitting the data of the session #1 and the energy consumption generated by the second user plane network element for transmitting the data of the session #1, energy consumption for transmitting the data of the session #1.

For example, a period in which the first network element reports the energy consumption is between 8:00 and 10:00, the user plane network element transmitting the data of the session #1 is updated from the first user plane network element to the second user plane network element at 9:00, the first energy consumption information includes a data volume X1 of the data of the session #1 transmitted by the first user plane network element between 8:00 and 9:00, the energy consumption of the first user plane network element includes energy consumption Y1 of the first user plane network element between 8:00 and 9:00, the first network element obtains a total volume K1 of data transmitted by the first user plane network element between 8:00 and 9:00, the second energy consumption information includes a data volume X2 of the data of the session #1 transmitted by the second user plane network element between 9:00 and 10:00, the energy consumption of the second user plane network element includes energy consumption Y2 of the second user plane network element between 9:00 and 10:00, and the second network element obtains a total volume K2 of data transmitted by the second user plane network element between 9:00 and 10:00. In this case, the energy consumption generated when the data of the session #1 is transmitted may be calculated according to the following formula: Energy consumption generated when the data of the session #1 is transmitted=Y1×X1/K1×coefficient 1+Y2×X2/K2×coefficient 2. In addition, in another calculation formula, energy consumption generated when the data of the session #1 is transmitted=Y1×X1/K1×coefficient 1+power consumption constant 1+Y2×X2/K2×coefficient 2+power consumption constant 2.

For example, the first user plane network element is an anchor user plane network element for the session, and the second user plane network element is an intermediate user plane network element for the session. In other words, the first user plane network element and the second user plane network element simultaneously transmit the data of the session #1. For example, a current period in which the first network element reports the energy consumption information is between 8:00 and 10:00, step S310 is performed at 9:00, the first energy consumption information includes a data volume X1 of the data of the session #1 transmitted by the first user plane network element between 8:00 and 10:00, the energy consumption of the first user plane network element includes energy consumption Y1 of the first user plane network element between 8:00 and 10:00, the first network element obtains a total volume K1 of data transmitted by the first user plane network element between 8:00 and 9:00, the second energy consumption information includes a data volume X2 of the data of the session #1 transmitted by the second user plane network element between 9:00 and 10:00, the energy consumption of the second user plane network element includes energy consumption Y2 of the second user plane network element between 9:00 and 10:00, and the second network element obtains a total volume K2 of data transmitted by the second user plane network element between 9:00 and 10:00. In this case, the energy consumption consumed when the data of the session #1 is transmitted may be calculated according to the following formula: Energy consumption consumed when the data of the session #1 is transmitted=Y1×X1/K1×coefficient 1+Y2×X2/K2×coefficient 2.

Optionally, in the communication method 300, after the first network element determines the energy consumption for the network to transmit the data, the communication method 300 may further include S360: Send, to the sixth network element, the determined energy consumption for the network to transmit the data. It should be noted herein that a manner in which the first network element specifically sends the energy consumption to the sixth network element is not limited in embodiments. For example, the first network element directly sends the energy consumption to the sixth network element, or the first network element sends the energy consumption to the sixth network element via another network element.

The foregoing describes a solution for improving, after the second user plane network element is added, accuracy of the energy consumption, determined by the first network element, for the network to transmit the data.

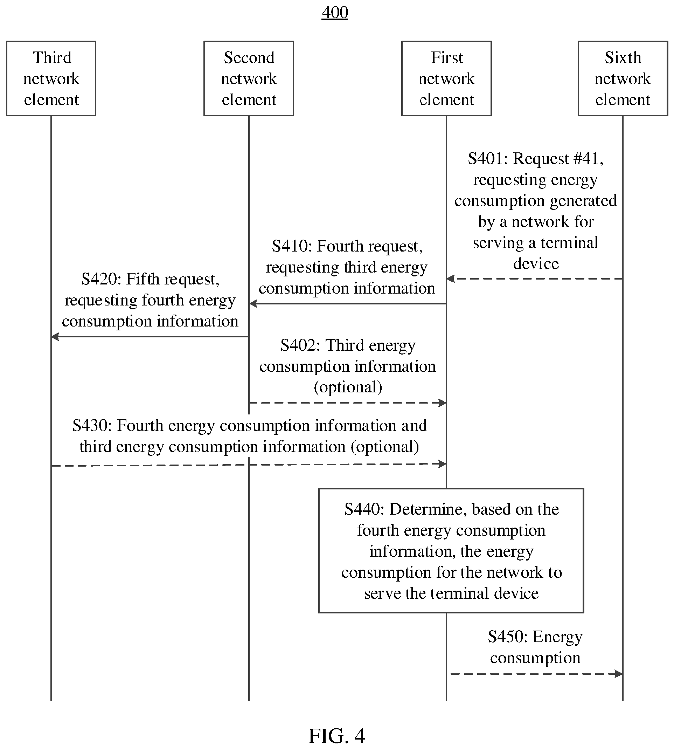

With reference to FIG. 4, the following describes a schematic flowchart of another communication method 400 according to an embodiment of this application. The method 400 may be applied to the system architecture shown in FIG. 1, but this is not limited in embodiments of this application. The communication method 400 may be performed by a first network element, a second network element, or a third network element, or may be performed by a module and/or a component (for example, a chip or an integrated circuit) that are/is mounted in a first network element, a second network element, or a third network element and that have/has a corresponding function. This is not limited in this application. For ease of description, the following provides descriptions by using an example in which the first network element, the second network element, and the third network element are execution bodies. As shown in FIG. 4, the method includes the following steps.

S410: The first network element sends a fourth request to the second network element, and correspondingly, the second network element receives the fourth request from the first network element, where the fourth request is used to request information related to energy consumption for the second network element to serve a terminal device.

In this embodiment, for a concept of the first network element, refer to the description of the first network element in the embodiment in FIG. 3. Details are not described herein again.

In this embodiment, when determining that the second network element needs to provide the information related to the energy consumption for the second network element to serve the terminal device, the first network element sends the fourth request to the second network element, to request the information related to the energy consumption for the second network element to serve the terminal device.

The information related to the energy consumption for the second network element to serve the terminal device is also referred to as third energy consumption information below. In other words, the third energy consumption information is related to the energy consumption generated by the second network element for serving the terminal device. Alternatively, in other words, an amount of the energy consumption generated by the second network element for serving the terminal device is related to the third energy consumption information, or it may be understood as that the third energy consumption information may be used to determine the energy consumption generated by the second network element for serving the terminal device.

It may be understood that, that the fourth request is used to request the information related to the energy consumption for the second network element to serve the terminal device may also be explained as any one of the following: (1) The fourth request is used to request information that affects the energy consumption for the second network element to serve the terminal device. (2) The fourth request is used to request the third energy consumption information, where the third energy consumption information is related to the energy consumption for the second network element to serve the terminal device. (3) The fourth request is used to request the third energy consumption information, where the third energy consumption information indicates/represents/describes a feature of serving the terminal device by the second network element.

For example, that the second network element serves the terminal device includes: The second network element transmits signaling of the terminal device, that is, the second network element includes a network element of an AMF type. Correspondingly, when the second network element is a network element of an AMF type, the third energy consumption information provided by the second network element includes at least one of the following: a ratio of a quantity of pieces of signaling of the terminal device transmitted by the second network element to a total quantity of pieces of signaling transmitted by the second network element, or a quantity of pieces of signaling of the terminal device transmitted by the second network element.

Optionally, the first network element sends the fourth request to the second network element based on a request #41. For example, before step S410, the communication method 400 further includes S401. S401: A sixth network element sends the request #41 to the first network element, and correspondingly, the first network element receives the request #41 from the sixth network element.

The request #41 is used to request energy consumption generated by a network for serving the terminal device. The first network element determines, based on the request #41, the second network element serving the terminal device, for example, a second network element for serving the terminal device or transmitting signaling of the terminal device. For example, the request #41 includes an identifier of the terminal device. For a concept of the sixth network element, refer to the description in S301 in the embodiment in FIG. 3. Details are not described herein again.

Optionally, the request #41 further includes information 2, and the information 2 indicates a mode in which the first network element feeds back the energy consumption generated by the network for serving the terminal device. The mode may be, for example, periodic. When the mode is periodic, and the first network element receives the information 2, the first network element may determine, based on the information 2, that the request #41 is a subscription-type request. For detailed descriptions of the information 2, refer to the description of the information 2 in S301 in the embodiment in FIG. 3. Details are not described herein again.

After the first network element receives the request #41, the first network element determines, based on the request #41, the second network element serving the terminal device, and then sends the fourth request to the second network element. For example, the first network element obtains, from a UDM network element, identification information or address information of the second network element serving the terminal device.

Optionally, when the first network element sends the fourth request to the second network element, the fourth request includes identification information of the terminal device. For example, the first network element includes, in the fourth request, the identifier of the terminal device in the request #41.

S420: The second network element sends, in response to switching, from the second network element to the third network element, a network element serving the terminal device, a fifth request to the third network element, and correspondingly, the third network element receives the fifth request from the second network element, where the fifth request is used to request information related to energy consumption for the third network element to serve the terminal device.

The second network element is also referred to as a source network element, and the third network element is also referred to as a target network element. That the network element serving the terminal device is switched from the second network element to the third network element may also be explained as that the network element serving the terminal device is updated from the second network element to the third network element; or may also be explained as that the network element serving the terminal device is changed from the second network element to the third network element.

It may be understood that the second network element and the third network element are network elements of a same type. For example, both the second network element and the third network element are AMF network elements that transmit signaling of the terminal device. For example, the terminal device performs AMF relocation switching, and consequently, a network element transmitting signaling of the terminal device is changed from a source AMF to a target AMF.

In this embodiment, when the network element serving the terminal device is switched from the second network element to the third network element, the second network element sends the fifth request to the third network element in response to the switching operation, where the fifth request is used to request the information related to the energy consumption for the third network element to serve the terminal device.

The information related to the energy consumption for the third network element to serve the terminal device is also referred to as fourth energy consumption information below. In other words, the fourth energy consumption information is related to the energy consumption generated by the third network element for serving the terminal device. Alternatively, in other words, an amount of the energy consumption generated by the third network element for serving the terminal device is related to the fourth energy consumption information, or it may be understood as that the fourth energy consumption information may be used to determine the energy consumption generated by the third network element for serving the terminal device.

It may be understood that, that the fifth request is used to request the information related to the energy consumption for the third network element to serve the terminal device may also be explained as any one of the following: (1) The fifth request is used to request information that affects the energy consumption for the third network element to serve the terminal device. (2) The fifth request is used to request the fourth energy consumption information, where the fourth energy consumption information is related to the energy consumption for the third network element to serve the terminal device. (3) The fifth request is used to request the fourth energy consumption information, where the fourth energy consumption information indicates/represents/describes a feature of serving the terminal device by the third network element.

For example, both the third network element and the second network element are network elements of an AMF type, and the third network element serving the terminal device includes: The third network element transmits signaling of the terminal device. The signaling of the terminal device transmitted by the third network element is explained as signaling related to the terminal device transmitted by the third network element. For example, when the third network element is an AMF, the AMF sends a subscription information query request to the UDM. Although the AMF interacts with the UDM, the AMF sends the subscription information query request to the UDM for the terminal device. Therefore, the signaling related to the terminal device sent by the AMF to the UDM also belongs to the signaling related to the terminal device. Correspondingly, the fourth energy consumption information provided by the third network element includes at least one of the following: a ratio of a quantity of pieces of signaling of the terminal device transmitted by the third network element to a total quantity of pieces of signaling transmitted by the third network element, or a quantity of pieces of signaling of the terminal device transmitted by the third network element. Optionally, the fourth energy consumption information may further include the total quantity of pieces of signaling transmitted by the third network element.

Optionally, the fifth request is a request used to request context transfer of the terminal device, and the fifth request includes information used to identify the first network element, to indicate the third network element to feed back the fourth energy consumption information to the first network element. For a specific implementation of the information used to identify the first network element, refer to the foregoing communication method 300.

Optionally, the second network element may further send second information to the first network element, where the second information indicates a moment at which the third network element sends the fourth energy consumption information. For example, the second information is carried in the fifth request.

For example, the second information indicates remaining time of a current reporting period. For example, if the reporting period is two hours, and the second information indicates remaining one hour, after receiving the fifth request and the second information, the third network element reports the fourth energy consumption information after one hour.

For another example, the second information indicates a start moment of the current reporting period, and the third network element determines, based on the reporting period, time for reporting the fourth energy consumption information. For example, if the reporting period is one hour, and the second information indicates that the current reporting period starts from 9:35, the third network element determines to report the fourth energy consumption information at 10:35.

For another example, the second information indicates a moment at which the fourth energy consumption information is reported, and the third network element reports the fourth energy consumption information at the moment.

Optionally, the fifth request may further include a tracking area update (tracking area update, TAU) timer (timer).

S430: The third network element sends the fourth energy consumption information to the first network element based on the fifth request, and correspondingly, the first network element receives the fourth energy consumption information.

In this embodiment, after receiving the fifth request, the third network element determines a time period for collecting statistics on the fourth energy consumption information, obtains the fourth energy consumption information in the time period, and then reports the fourth energy consumption information to the first network element at the reporting moment. That is, the fourth energy consumption information determined by a fourth network element is related to energy consumption generated, in the time period, by the third network element for serving the terminal device.

The third network element may determine, based on the second information, the time period for collecting statistics on the fourth energy consumption information. For example, if the reporting period is two hours, and the second information indicates remaining one hour, after receiving the fifth request and the second information, the third network element collects statistics on the fourth energy consumption information in the remaining one hour. For another example, if the reporting period is two hours, and the second information indicates that the current reporting period starts from 8:00, the third network element determines that the time for reporting the fourth energy consumption information is 10:00. Because time at which the third network element starts to serve the terminal device is 9:00, the third network element collects statistics on the fourth energy consumption information in a time period between 9:00 and 10:00. For another example, if the first information indicates that reporting is performed at 10:00, and the time at which the third network element starts to serve the terminal device is 9:00, the third network element collects statistics on the fourth energy consumption information in the time period between 9:00 and 10:00.

Optionally, the third network element may determine the sending time or the reporting period of the fourth energy consumption information. For a specific implementation, refer to the manner in which the second user plane network element determines the time or the period in the communication method 300. Details are not described herein again.

S440: The first network element determines, based on the fourth energy consumption information, the energy consumption for the network to serve the terminal device.

For example, the first network element determines, based on the fourth energy consumption information, the energy consumption generated by the third network element for serving the terminal device, and then determines, based on the energy consumption generated by the third network element for serving the terminal device, the energy consumption generated by the network for serving the terminal device.

For example, the first network element sends a request #51 to a management network element, where the request #51 is used to request energy consumption of the third network element. Correspondingly, the management network element indicates the energy consumption of the third network element to the first network element in response to the request #51. Then, the first network element determines, based on the energy consumption of the third network element and the fourth energy consumption information sent by the third network element, the energy consumption generated by the third network element for serving the terminal device. Alternatively, the energy consumption may be replaced with carbon emission, an amount of renewable energy, a proportion of renewable energy, or the like.

For example, the request #51 includes information indicating a time period, to indicate that the request #51 is used to request energy consumption of the third network element in the time period. For example, the information indicating the time period indicates a time period between 9:00 and 10:00, to indicate that energy consumption of the third network element between 9:00 and 10:00 is requested.

For example, both the second network element and the third network element are network elements of an AMF type. When determining, based on the energy consumption of the target network element and the fourth energy consumption information sent by the target network element, the energy consumption generated by the target network element for serving the terminal device, the first network element determines the energy consumption according to the following formula:
Energy consumption generated by the target network element for transmitting data of the signaling of the terminal device=energy consumption of the target network element×(quantity of pieces of signaling of the terminal device transmitted by the target network element in the fourth energy consumption information/total quantity of pieces of signaling transmitted by the target network element); or
energy consumption generated by the target network element for transmitting data of the signaling of the terminal device=energy consumption of the target network element×(quantity of pieces of signaling of the terminal device transmitted by the target network element in the fourth energy consumption information/total quantity of pieces of signaling transmitted by the target network element)×coefficient 1; or
energy consumption generated by the target network element for transmitting data of the signaling of the terminal device=energy consumption of the target network element×(quantity of pieces of signaling of the terminal device transmitted by the target network element in the fourth energy consumption information/total quantity of pieces of signaling transmitted by the target network element)×coefficient 1+power consumption constant 1.

The power consumption constant 1 corresponding to the target network element may be obtained from an OAM network element, and the coefficient 1 corresponding to the target network element may be determined according to a preconfigured rule, for example, may be determined based on the TAU timer. In an implementation, the TAU timer and corresponding coefficient information are preconfigured in the network. For example, a coefficient corresponding to the TAU timer that is greater than 80 ms and less than or equal to 100 ms is 1.0, a coefficient corresponding to the TAU timer that is greater than 100 ms and less than or equal to 200 ms is 0.9, and a coefficient corresponding to the TAU timer that is greater than 200 ms is 0.8. The first network element may obtain the TAU timer based on the fifth request in S420, and may obtain, based on locally preconfigured information, the TAU timer and corresponding coefficient information that are preconfigured in the network.

Based on the method in FIG. 4, after the network element serving the terminal device is switched, the source network element further requests the target network element to provide the fourth energy consumption information for the first network element, so that the first network element determines, based on the fourth energy consumption information, the energy consumption generated by the network for serving the terminal device. In this way, the determined energy consumption may include the energy consumption generated by the third network element for serving the terminal device, and accuracy is higher.

Optionally, the communication method 400 may further include: The second network element sends the third energy consumption information to the third network element. Optionally, the third energy consumption information is carried in the fifth request.

For example, when both the second network element and the third network element are network elements of an AMF type, the third energy consumption information is at least one of the following: a quantity of pieces of signaling of the terminal device transmitted by the second network element statistically collected by the second network element in the current reporting period, or a ratio of a quantity of pieces of signaling of the terminal device transmitted by the second network element to a total quantity of pieces of signaling transmitted by the second network element. For example, if the current reporting period is between 8:00 and 10:00, and the network element serving the terminal device is changed from the second network element to the third network element at 9:00, the fifth request includes at least one of the following: a quantity of pieces of signaling of the terminal device transmitted by the source network element between 8:00 and 9:00, or a ratio of a quantity of pieces of signaling of the terminal device transmitted by the source network element between 8:00 and 9:00 to a total quantity of pieces of signaling transmitted by the source network element between 8:00 and 9:00. Optionally, the fifth request may further include the total quantity of pieces of signaling transmitted by the source network element between 8:00 and 9:00.

Optionally, when the second network element sends the third energy consumption information to the third network element, the third network element further sends the third energy consumption information to the first network element, and correspondingly, the first network element receives the third energy consumption information. For example, in an implementation, the third network element sends the third energy consumption information in step S430. That is, the third network element sends the third energy consumption information and the fourth energy consumption information together to the first network element.

Optionally, the communication method 400 may further include S402: The second network element sends the third energy consumption information to the first network element. For example, the second network element sends the third energy consumption information to the first network element before sending the fifth request to the third network element, or the second network element sends the fifth request to the first network element after sending the fifth request to the third network element. A sequence is not limited in embodiments.

It may be understood that, if the second network element sends the third energy consumption information to the first network element, the second network element may not send the third energy consumption information to the third network element; or if the second network element sends the third energy consumption information to the third network element, the second network element may not send the third energy consumption information to the first network element.

Optionally, after the first network element receives the third energy consumption information, the communication method 400 further includes: The first network element determines, based on the third energy consumption information, the energy consumption generated by the second network element for serving the terminal device.

For example, that the first network element obtains, based on the third energy consumption information, the energy consumption generated by the second network element for serving the terminal device includes: The first network element requests energy consumption of the second network element from the management network element, correspondingly, the management network element sends the energy consumption of the second network element to the first network element in response to the request, and the first network element determines, based on the energy consumption of the second network element and the third energy consumption information sent by the second network element, the energy consumption generated by the second network element for serving the terminal device.

For example, both the second network element and the third network element are network elements of an AMF type. When determining, based on the energy consumption of the source network element and the third energy consumption information sent by the source network element, the energy consumption generated by the source network element for serving the terminal device, the first network element determines the energy consumption according to the following formula:
Energy consumption generated by the source network element for transmitting data of the signaling of the terminal device=energy consumption of the source network element×(quantity of pieces of signaling of the terminal device transmitted by the source network element in the third energy consumption information/total quantity of pieces of signaling transmitted by the source network element); or
energy consumption generated by the source network element for transmitting data of the signaling of the terminal device=energy consumption of the source network element×(quantity of pieces of signaling of the terminal device transmitted by the source network element in the third energy consumption information/total quantity of pieces of signaling transmitted by the source network element)×coefficient 2; or
energy consumption generated by the source network element for transmitting data of the signaling of the terminal device=energy consumption of the source network element×(quantity of pieces of signaling of the terminal device transmitted by the source network element in the third energy consumption information/total quantity of pieces of signaling transmitted by the source network element)×coefficient 2+power consumption constant 2. Concepts of the coefficient and power consumption may be similar to those in the foregoing embodiment, and details are not described herein again.

Optionally, after obtaining the energy consumption generated by the second network element for serving the terminal device and the energy consumption generated by the third network element for serving the terminal device, the first network element may determine total energy consumption generated by the network elements of the same type for serving the terminal device. For example, the third energy consumption information includes a quantity X1 of pieces of signaling of the terminal device transmitted by the second network element between 8:00 and 9:00 and a total quantity Y1 of pieces of signaling transmitted by the second network element between 8:00 and 9:00, an energy consumption value of the second network element between 8:00 and 9:00 is Z1, the fourth energy consumption information includes a quantity X2 of pieces of signaling of the terminal device transmitted by the third network element between 9:00 and 10:00 and a total quantity Y2 of pieces of signaling transmitted by the third network element between 9:00 and 10:00, and an energy consumption value of the third network element between 9:00 and 10:00 is Z2. In this case, energy consumption corresponding to the terminal device is equal to Z1×X1/Y1×coefficient 1+power consumption constant 1+Z2×X2/Y2×coefficient 2+power consumption constant 2.

Optionally, in the communication method 400, after the first network element determines the energy consumption generated by the network for serving the terminal device, the communication method 400 may further include S450: Send, to the sixth network element, the determined energy consumption generated by the network for serving the terminal device. It should be noted herein that a manner in which the first network element specifically sends the energy consumption to the sixth network element is not limited in embodiments. For example, the first network element directly sends the energy consumption to the sixth network element, or the first network element sends the energy consumption to the sixth network element via another network element.

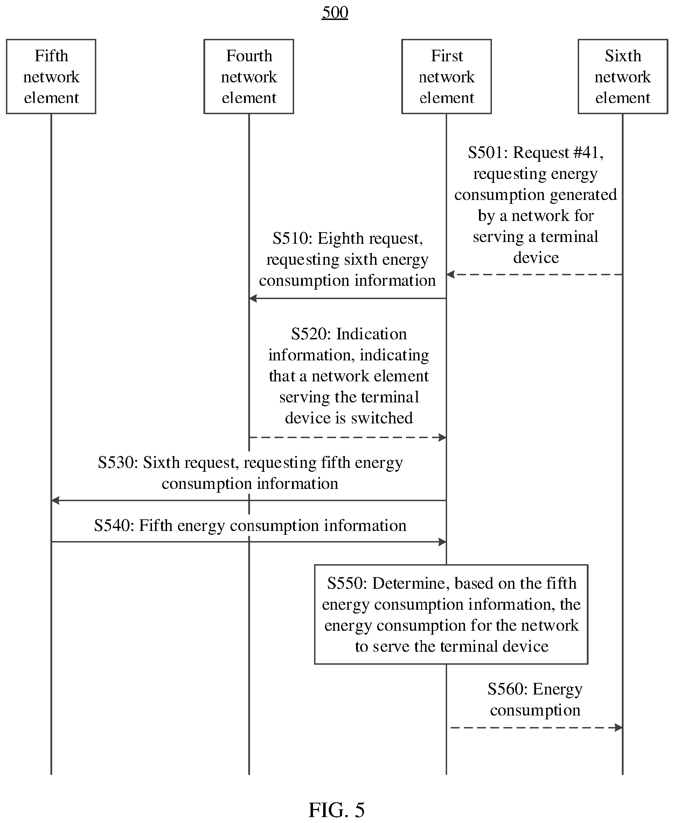

FIG. 5 is a schematic flowchart of another communication method 500 according to an embodiment of this application. The communication method 500 may be performed by a first network element, a fourth network element, or a fifth network element, or may be performed by a module and/or a component (for example, a chip or an integrated circuit) that are/is mounted in a first network element, a fourth network element, or a fifth network element and that have/has a corresponding function. This is not limited in this application. For ease of description, the following provides descriptions by using an example in which the first network element, the fourth network element, and the fifth network element are execution bodies. As shown in FIG. 5, the method includes the following steps.

S510: The first network element sends an eighth request to the fourth network element, and correspondingly, the fourth network element receives the eighth request from the first network element, where the eighth request is used to request information related to energy consumption for the fourth network element to serve a terminal device.

The fourth network element may be considered as the second network element in the embodiment in FIG. 4, and the eighth request may be considered as the fourth request in the embodiment in FIG. 4. For a specific implementation of step S510, refer to step S410. Details are not described herein again.

In this embodiment, the information related to the energy consumption for the fourth network element to serve the terminal device is also referred to as sixth energy consumption information.

Optionally, the first network element determines, based on a request #41, to send the eighth request to the second network element. For example, before step S510, the communication method 500 further includes S501: A sixth network element sends the request #41 to the first network element, and correspondingly, the first network element receives the request #41 from the sixth network element.

The request #41 is used to request energy consumption generated by a network for serving the terminal device. For detailed descriptions of the request #41, refer to the description in S401 in the embodiment in FIG. 4. Details are not described herein again. In this embodiment, the request #41 is also referred to as a seventh request. In this embodiment, that the first network element determines, based on the seventh request, the fourth network element serving the terminal device, for example, a fourth network element for serving the terminal device or transmitting signaling of the terminal device; and then sends the eighth request to the fourth network element. For example, the first network element obtains, from a UDM network element, identification information or address information of the fourth network element serving the terminal device.

S520: When a network element serving the terminal device is switched from the fourth network element (which may be referred to as a source network element) to the fifth network element (which may be referred to as a target network element), the fourth network element sends indication information to the first network element, and correspondingly, the first network element receives the indication information, where the indication information indicates that the network element serving the terminal device is switched.

It may be understood that the fourth network element and the fifth network element are network elements of a same type. For example, both the fourth network element and the fifth network element are network elements of an AMF type. In other words, in this scenario, the fourth network element is a source AMF network element, and the fifth network element is a target AMF network element.

For example, when determining that the eighth request has been received, the fourth network element sends the indication information to the first network element, that is, the fourth network element sends the indication information to the first network element based on the received eighth request.

For example, after receiving the eighth request, the fourth network element stores a relationship between the eighth request and the terminal device. When the network element serving the terminal device is changed from the fourth network element to the fifth network element, the fourth network element sends the indication information to the first network element. For another example, the terminal device corresponds to a flag #2, and an initial value of the flag #2 is 0. After receiving the eighth request, the fourth network element updates the value of the flag #2 to 1, indicating that the request used to request the information related to the energy consumption for serving the terminal device is received. When the network element serving the terminal device is changed from the fourth network element to the fifth network element, the fourth network element sends the indication information to the first network element based on the value 1 of the flag #2. Optionally, when the sixth network element requests the first network element to periodically send the energy consumption, the eighth request sent by the first network element to the fourth network element is a subscription request message. In other words, the eighth request is a subscription-type request. When the network element is switched, the fourth network element sends the indication information to the first network element based on the eighth request being the subscription request message.

For another example, after receiving the eighth request, the fourth network element sets a corresponding timer. When the network element serving the terminal device is changed from the fourth network element to the fifth network element, if the timer does not expire, the fourth network element sends the indication information to the first network element. Duration of the timer may be specified in a protocol, or may be preconfigured in the fourth network element, or may be carried in the eighth request. This is not limited in embodiments of this application.

The fourth network element may alternatively determine, based on a local configuration or another policy, to send the indication information to the first network element. This is not limited in embodiments of this application.

Optionally, the fourth network element sends, to the first network element, the information related to the energy consumption for the fourth network element to serve the terminal device, so that the first network element calculates the energy consumption generated by the fourth network element for serving the terminal device.

Optionally, that the fourth network element sends the indication information to the first network element may also be replaced with that the UDM network element sends the indication information to the first network element. Correspondingly, the first network element receives the indication information from the UDM network element. In other words, in this implementation, when the network element serving the terminal device is changed from the fourth network element to the fifth network element, the UDM sends, to the first network element, the indication information indicating that the network element serving the terminal device is switched.

S530: The first network element sends a sixth request to the fifth network element after switching, and correspondingly, the fifth network element receives the sixth request, where the sixth request is used to request information related to energy consumption for the fifth network element to serve the terminal device.

In this embodiment, the information related to the energy consumption for the fifth network element to serve the terminal device is also referred to as fifth energy consumption information. In other words, an amount of the energy consumption generated by the fifth network element for serving the terminal device is related to the fifth energy consumption information.

It should be noted herein that a manner in which the first network element determines the fifth network element is not limited in embodiments. For example, the indication information in S520 includes identification information or address information of the fifth network element, and the first network element determines the fifth network element based on the identification information or the address information of the fifth network element in the indication information. For another example, after the first network element receives the indication information, the first network element queries the UDM network element for information about a network element currently serving the terminal device, and the UDM sends the identification information or the address information of the fifth network element to the second network element.

Optionally, the communication method 500 further includes: After receiving the indication information from the fourth network element, the first network element determines whether the sixth request needs to be sent to the fifth network element. When it is determined that the sixth request needs to be sent to the fifth network element, S530 is performed. For example, when a reporting mode indicated by the seventh request is periodic, the first network element determines that the sixth request needs to be sent to the fifth network element.

S540: The fifth network element sends the fifth energy consumption information to the first network element, and correspondingly, the first network element receives the fifth energy consumption information.

S550: The first network element determines, based on the fifth energy consumption information, the power consumption generated when the network serves the terminal device.

For example, the first network element determines the power consumption for the fifth network element to serve the terminal device, and then determines, based on the energy consumption generated by the fifth network element for serving the terminal device and energy consumption generated by another network element for serving the terminal device, the total energy consumption generated by the network for serving the terminal device.

For example, when both the fourth network element and the fifth network element are network elements of an AMF type, for an implementation in which the first network element determines the energy consumption generated by the fifth network element for serving the terminal device, refer to the description in the embodiment in FIG. 4. Details are not described herein again.

Optionally, in the communication method 500, after the first network element determines the energy consumption generated by the network for serving the terminal device, the communication method 500 may further include S560: Send, to the sixth network element, the determined energy consumption generated by the network for serving the terminal device. It should be noted herein that a manner in which the first network element specifically sends the energy consumption to the sixth network element is not limited in embodiments. For an implementation, refer to the description of S450 in the embodiment in FIG. 4. Details are not described herein again.

Based on the method shown in FIG. 5, the first network element may learn that the network element serving the terminal device is switched, and request the fifth energy consumption information from the fifth network element after switching, so as to determine, based on the fifth energy consumption information, the energy consumption generated by the network for serving the terminal device. In this way, the determined energy consumption may include the energy consumption generated by the fifth network element for serving the terminal device, and accuracy is higher.

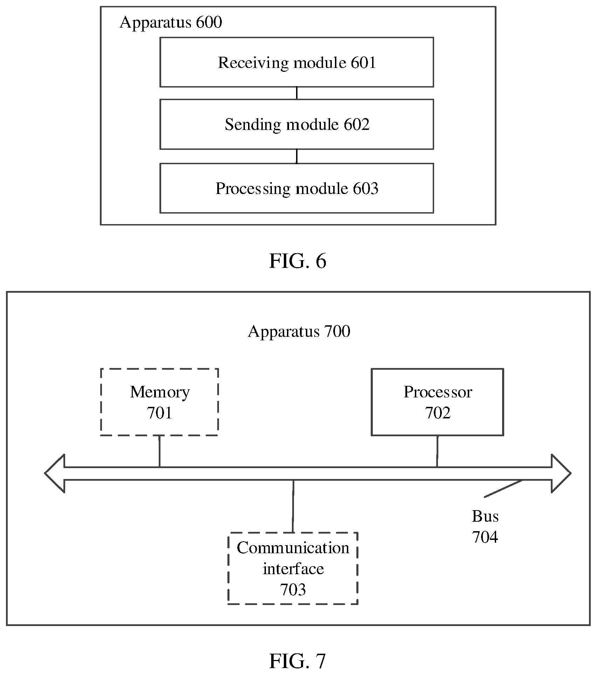

Based on a same concept, as shown in FIG. 6, an embodiment of this application provides a communication apparatus 600. The communication apparatus 600 includes a receiving module 601, a sending module 602, and a processing module 603.

In a first embodiment, the communication apparatus 600 may be used in a session management network element in a network.

The receiving module 601 is configured to receive a first request, where the first request is used to request energy consumption information, the energy consumption information is used to determine energy consumption for a network to transmit data, and the data includes first data of a session. The sending module 602 is configured to send a second request to a first user plane network element based on the first request, where the second request is used to request information related to energy consumption for the first user plane network element to transmit the first data. The sending module 602 is further configured to: in response to updating, from the first user plane network element to a second user plane network element, a user plane network element transmitting the first data, or in response to inserting a second user plane network element to transmit the first data, send a third request to the second user plane network element, where the third request is used to request information related to energy consumption for the second user plane network element to transmit the first data.

For example, the receiving module 601 is configured to receive the first request in S310 in the embodiment in FIG. 3.

For example, the sending module 602 is configured to send the second request in S320 in the embodiment in FIG. 3.

In a possible implementation, the information related to the energy consumption for the first user plane network element to transmit the first data includes at least one of the following: a rate at which the first user plane network element transmits the first data, or a data volume of the first data transmitted by the first user plane network element; and the information related to the energy consumption for the second user plane network element to transmit the first data includes at least one of the following: a rate at which the second user plane network element transmits the first data, or a data volume of the first data transmitted by the second user plane network element.

In a possible implementation, the sending module 602 is further configured to send first information to the second user plane network element, where the first information indicates a moment at which the second user plane network element sends the information related to the energy consumption for the second user plane network element to transmit the first data.

In a possible implementation, the sending module 602 is further configured to send the first information to the second user plane network element when the first request indicates to periodically send the energy consumption information.

In a possible implementation, that the sending module 602 is further configured to send the third request to the second user plane network element includes: sending the third request to the second user plane network element based on the first request.

In a possible implementation, the sending module 602 is further configured to send the third request to the second user plane network element when the first request meets a first condition, where the first condition includes: The energy consumption information requested by the first request is related to the first data.

In a possible implementation, the sending module 602 is further configured to send the third request to the second user plane network element when a second condition is met, where the second condition includes: A timer does not expire when the user plane network element transmitting the first data is updated from the first user plane network element to the second user plane network element; or a timer does not expire when the second user plane network element is inserted to transmit the first data. The timer is started when the session management network element receives the first request.

In a possible implementation, the first request includes information about the session, and before the second request is sent to the first user plane network element based on the first request, the processing module 603 is configured to determine the first user plane network element based on the information about the session.

In a possible implementation, the receiving module 601 is configured to receive the first request from the first network element. The sending module 602 is further configured to send, to the first network element, information used to identify the second user plane network element.

In a second embodiment, the communication apparatus 600 may be used in a second network element in a network.

The receiving module 601 is configured to receive a fourth request, where the fourth request is used to request information related to energy consumption for the second network element to serve a terminal device. The sending module 602 is configured to: in response to switching, from the second network element to a third network element, a network element serving the terminal device, send a fifth request to the third network element, where the fifth request is used to request information related to energy consumption for the third network element to serve the terminal device.

In a possible implementation, the information related to the energy consumption for the second network element to serve the terminal device includes at least one of the following: a ratio of a quantity of pieces of signaling of the terminal device transmitted by the second network element to a total quantity of pieces of signaling transmitted by the second network element, or a quantity of pieces of signaling of the terminal device transmitted by the second network element; and the information related to the energy consumption for the third network element to serve the terminal device includes at least one of the following: a ratio of a quantity of pieces of signaling of the terminal device transmitted by the third network element to a total quantity of pieces of signaling transmitted by the third network element, or a quantity of pieces of signaling of the terminal device transmitted by the third network element.

In a possible implementation, the sending module 602 is further configured to send, to the third network element, the information related to the energy consumption for the second network element to serve the terminal device.

In a possible implementation, the sending module 602 is further configured to send second information to the third network element, where the second information indicates a moment at which the third network element sends the information related to the energy consumption for the third network element to serve the terminal device.

In a third embodiment, the communication apparatus 600 may be used in a third network element in a network.

The receiving module 601 is configured to receive a fifth request from a second network element, where the fifth request is used to request information related to energy consumption for the third network element to serve a terminal device, the second network element is a source network element serving the terminal device, and the third network element is a target network element serving the terminal device. The sending module 602 is configured to send, based on the fifth request, the information related to the energy consumption for the third network element to serve the terminal device.

In a possible implementation, the receiving module 601 is further configured to receive, from the second network element, information related to energy consumption for the second network element to serve the terminal device. The sending module 602 is further configured to send the information related to the energy consumption for the second network element to serve the terminal device.

In a possible implementation, the third network element serving the terminal device includes: The third network element transmits signaling of the terminal device; and the information related to the energy consumption for the third network element to serve the terminal device includes: a ratio of a quantity of pieces of signaling of the terminal device transmitted by the third network element to a total quantity of pieces of signaling transmitted by the third network element, or a quantity of pieces of signaling of the terminal device transmitted by the third network element.

In a possible implementation, the receiving module 601 is configured to receive second information from the second network element, where the second information indicates a moment at which the third network element sends the information related to the energy consumption for the third network element to serve the terminal device.

In a possible implementation, the processing module 603 is configured to determine, based on the second information, the information related to the energy consumption for the third network element to serve the terminal device.

In a fourth embodiment, the communication apparatus 600 may be used in a first network element in a network.

The receiving module 601 is configured to receive, from a third network element, information related to energy consumption for the third network element to serve a terminal device, where the information related to the energy consumption for the third network element to serve the terminal device includes at least one of the following: a ratio of a quantity of pieces of signaling of the terminal device transmitted by the third network element to a total quantity of pieces of signaling transmitted by the third network element, or a quantity of pieces of signaling of the terminal device transmitted by the third network element. The processing module 603 is configured to determine, based on the information related to the energy consumption for the third network element to serve the terminal device, energy consumption for the network to serve the terminal device.

In a possible implementation, the processing module 603 is specifically configured to: determine, based on total energy consumed by the third network element, the ratio of the quantity of pieces of signaling of the terminal device transmitted by the third network element to the total quantity of pieces of signaling transmitted by the third network element, and basic power consumption of the third network element, the energy consumption for the third network element to serve the terminal device; and determine, based on the energy consumption for the third network element to serve the terminal device, the energy consumption for the network to serve the terminal device.

In a possible implementation, the receiving module 601 is further configured to receive information related to energy consumption for the second network element to serve the terminal device, where the information related to the energy consumption for the second network element to serve the terminal device includes at least one of the following: a ratio of a quantity of pieces of signaling of the terminal device transmitted by the second network element to a total quantity of pieces of signaling transmitted by the second network element, or a quantity of pieces of signaling of the terminal device transmitted by the second network element. The processing module 603 is specifically configured to determine, based on the information related to the energy consumption for the second network element to serve the terminal device, the energy consumption for the second network element to serve the terminal device.

In a fifth embodiment, the communication apparatus 600 may be used in a first network element in a network.

The receiving module 601 is configured to obtain indication information, where the indication information indicates that a network element serving a terminal device is switched. The sending module 602 is configured to send a sixth request to a fifth network element that serves the terminal device after switching, where the sixth request is used to request information related to energy consumption for the fifth network element to serve the terminal device.

In a possible implementation, the indication information includes information used to identify the fifth network element.

In a possible implementation, the receiving module 601 is further configured to receive a seventh request, where the seventh request is used to request energy consumption for the network to serve the terminal device. The sending module 602 is further configured to send the sixth request to the fifth network element based on the seventh request.

In a possible implementation, the sending module 602 is specifically configured to send the sixth request to the fifth network element when the seventh request indicates to periodically send the energy consumption.

Based on a same technical concept, an embodiment of this application further provides a communication apparatus 700. For example, the communication apparatus 700 may be a chip or a chip system. Optionally, in this embodiment of this application, the chip system may include a chip, or may include a chip and another discrete device.

The communication apparatus 700 may be configured to implement a function of any network element in the communication system described in the foregoing embodiments.

As shown in FIG. 7, the apparatus 700 in this embodiment includes a memory 701 and a processor 702. In an implementation, the apparatus 700 further includes a communication interface 703 and a bus 704. The memory 701, the processor 702, and the communication interface 703 are communicatively connected to each other through the bus 704.

The memory 701 may be a read-only memory (read-only memory, ROM), a static storage device, a dynamic storage device, or a random access memory (random access memory, RAM). The memory 701 may store a program. When the program stored in the memory 701 is executed by the processor 702, the processor 702 is configured to perform steps of the methods shown in FIG. 3 to FIG. 5.

The processor 702 may be a general-purpose central processing unit (central processing unit, CPU), a microprocessor, an application-specific integrated circuit (application-specific integrated circuit, ASIC), or one or more integrated circuits, and is configured to execute a related program, to implement the methods shown in FIG. 3 to FIG. 5 in embodiments of this application.

Alternatively, the processor 702 may be an integrated circuit chip, and has a signal processing capability. In an implementation process, the steps of the methods in FIG. 3 to FIG. 5 in embodiments of this application may be completed by using an integrated logic circuit of hardware or an instruction in a form of software in the processor 702.

The foregoing processor 702 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The processor may implement or perform the method, the steps, and logic block diagrams that are disclosed in embodiments of this application. The general-purpose processor may be a microprocessor, or the processor may be a conventional processor or the like.

The steps in the method disclosed with reference to embodiments of this application may be directly performed and completed by a hardware decoding processor, or may be performed and completed by a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 701. The processor 702 reads information in the memory 701, and completes, in combination with hardware of the processor, functions that need to be executed by units included in the apparatus in this application. For example, steps/functions in the embodiments shown in FIG. 3 to FIG. 5 may be performed.

The communication interface 703 uses a transceiver apparatus, for example, but not limited to, a transceiver, to implement communication between the apparatus 700 and another device or a communication network.

The bus 704 may include a path for information transfer between various components (for example, the memory 701, the processor 702, and the communication interface 703) of the apparatus 700.

It should be understood that the apparatus 700 shown in this embodiment of this application may be an electronic device, or may be a chip disposed in an electronic device. The apparatus 700 may be deployed in a terminal device, or may be deployed in a network device.

All or some of the foregoing embodiments may be implemented by using software, hardware, firmware, or any combination thereof. When software is used to implement embodiments, the foregoing embodiments may be implemented totally or partially in a form of a computer program product. The computer program product includes one or more computer instructions or computer programs. When the computer instructions or the computer programs are loaded and executed on a computer, the procedure or functions according to embodiments of this application are totally or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be a usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof indicates any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as a limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that this implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logic function division. There may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate components may or may not be physically separate, and components displayed as units may or may not be physical units, may be located in one place, or may be distributed on a plurality of network units. A part or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

## Claims

1. A communication method, applied to a session management network element in a network, wherein the method comprises:
receiving a first request, wherein the first request is used to request energy consumption information, the energy consumption information is used to determine energy consumption for the network to transmit data, and the data comprises first data of a session;
sending a second request to a first user plane network element based on the first request, wherein the second request is used to request information related to energy consumption for the first user plane network element to transmit the first data; and
in response to updating, from the first user plane network element to a second user plane network element, a user plane network element transmitting the first data, or in response to inserting a second user plane network element to transmit the first data, sending a third request to the second user plane network element, wherein the third request is used to request information related to energy consumption for the second user plane network element to transmit the first data.

2. The method according to claim 1, wherein the information related to the energy consumption for the first user plane network element to transmit the first data comprises at least one of the following: a rate at which the first user plane network element transmits the first data, or a data volume of the first data transmitted by the first user plane network element; and
the information related to the energy consumption for the second user plane network element to transmit the first data comprises at least one of the following: a rate at which the second user plane network element transmits the first data, or a data volume of the first data transmitted by the second user plane network element.

3. The method according to claim 1 or 2, wherein the method further comprises:
sending first information to the second user plane network element, wherein the first information indicates a moment at which the second user plane network element sends the information related to the energy consumption for the second user plane network element to transmit the first data.

4. The method according to claim 3, wherein sending the first information to the second user plane network element comprises:
sending the first information to the second user plane network element when the first request indicates to periodically send the energy consumption information.

5. The method according to any one of claims 1 to 4, wherein sending the third request to the second user plane network element comprises:
sending the third request to the second user plane network element based on the first request.

6. The method according to claim 5, wherein sending the third request to the second user plane network element based on the first request comprises:
sending the third request to the second user plane network element when the first request meets a first condition, wherein the first condition comprises:
the energy consumption information requested by the first request is related to the first data.

7. The method according to claim 5, wherein sending the third request to the second user plane network element based on the first request comprises:
sending the third request to the second user plane network element when a second condition is met, wherein
the second condition comprises: a timer does not expire when the user plane network element transmitting the first data is updated from the first user plane network element to the second user plane network element; or
a timer does not expire when the second user plane network element is inserted to transmit the first data, wherein
the timer is started when the session management network element receives the first request.

8. The method according to any one of claims 1 to 7, wherein the first request comprises information about the session; and before sending the second request to the first user plane network element based on the first request, the method further comprises:
determining the first user plane network element based on the information about the session.

9. The method according to any one of claims 1 to 8, wherein receiving the first request comprises:
receiving the first request from a first network element; and
the method further comprises:
sending, to the first network element, information used to identify the second user plane network element.

10. A communication method, applied to a second network element in a network, and comprising:
receiving a fourth request, wherein the fourth request is used to request information related to energy consumption for the second network element to serve a terminal device; and
in response to switching, from the second network element to a third network element, a network element serving the terminal device, sending a fifth request to the third network element, wherein the fifth request is used to request information related to energy consumption for the third network element to serve the terminal device.

11. The method according to claim 10, wherein the information related to the energy consumption for the second network element to serve the terminal device comprises at least one of the following: a ratio of a quantity of pieces of signaling of the terminal device transmitted by the second network element to a total quantity of pieces of signaling transmitted by the second network element, or a quantity of pieces of signaling of the terminal device transmitted by the second network element; and
the information related to the energy consumption for the third network element to serve the terminal device comprises at least one of the following: a ratio of a quantity of pieces of signaling of the terminal device transmitted by the third network element to a total quantity of pieces of signaling transmitted by the third network element, or a quantity of pieces of signaling of the terminal device transmitted by the third network element.

12. The method according to claim 10 or 11, wherein the method further comprises:
sending, to the third network element, the information related to the energy consumption for the second network element to serve the terminal device.

13. The method according to any one of claims 10 to 12, wherein the method further comprises:
sending second information to the third network element, wherein the second information indicates a moment at which the third network element sends the information related to the energy consumption for the third network element to serve the terminal device.

14. A communication method, applied to a third network element in a network, and comprising:
receiving a fifth request from a second network element, wherein the fifth request is used to request information related to energy consumption for the third network element to serve a terminal device, the second network element is a source network element serving the terminal device, and the third network element is a target network element serving the terminal device; and
sending, based on the fifth request, the information related to the energy consumption for the third network element to serve the terminal device.

15. The method according to claim 14, wherein the method further comprises:
receiving, from the second network element, information related to energy consumption for the second network element to serve the terminal device; and
sending the information related to the energy consumption for the second network element to serve the terminal device.

16. The method according to claim 14 or 15, wherein the third network element serving the terminal device comprises: the third network element transmits signaling of the terminal device; and
the information related to the energy consumption for the third network element to serve the terminal device comprises:
a ratio of a quantity of pieces of signaling of the terminal device transmitted by the third network element to a total quantity of pieces of signaling transmitted by the third network element, or a quantity of pieces of signaling of the terminal device transmitted by the third network element.

17. The method according to any one of claims 14 to 16, wherein the method further comprises:
receiving second information from the second network element, wherein the second information indicates a moment at which the third network element sends the information related to the energy consumption for the third network element to serve the terminal device.

18. The method according to claim 17, wherein the method further comprises:
determining, based on the second information, the information related to the energy consumption for the third network element to serve the terminal device.

19. A communication method, applied to a first network element in a network, and comprising:
receiving, from a third network element, information related to energy consumption for the third network element to serve a terminal device, wherein the information related to the energy consumption for the third network element to serve the terminal device comprises at least one of the following: a ratio of a quantity of pieces of signaling of the terminal device transmitted by the third network element to a total quantity of pieces of signaling transmitted by the third network element, or a quantity of pieces of signaling of the terminal device transmitted by the third network element; and
determining, based on the information related to the energy consumption for the third network element to serve the terminal device, energy consumption for the network to serve the terminal device.

20. The method according to claim 19, wherein determining the energy consumption for the network to serve the terminal device comprises:
determining, based on total energy consumed by the third network element, the ratio of the quantity of pieces of signaling of the terminal device transmitted by the third network element to the total quantity of pieces of signaling transmitted by the third network element, and basic power consumption of the third network element, the energy consumption for the third network element to serve the terminal device; and
determining, based on the energy consumption for the third network element to serve the terminal device, the energy consumption for the network to serve the terminal device.

21. The method according to claim 19 or 20, wherein the method further comprises:
receiving information related to energy consumption for the second network element to serve the terminal device, wherein the information related to the energy consumption for the second network element to serve the terminal device comprises at least one of the following: a ratio of a quantity of pieces of signaling of the terminal device transmitted by the second network element to a total quantity of pieces of signaling transmitted by the second network element, or a quantity of pieces of signaling of the terminal device transmitted by the second network element; and
determining, based on the information related to the energy consumption for the second network element to serve the terminal device, the energy consumption for the second network element to serve the terminal device.

22. A communication method, applied to a first network element in a network, and comprising:
obtaining indication information, wherein the indication information indicates that a network element serving a terminal device is switched; and
sending a sixth request to a fifth network element that serves the terminal device after switching, wherein the sixth request is used to request information related to energy consumption for the fifth network element to serve the terminal device.

23. The method according to claim 22, wherein the indication information comprises information used to identify the fifth network element.

24. The method according to claim 22 or 23, wherein the method further comprises:
receiving a seventh request, wherein the seventh request is used to request energy consumption for the network to serve the terminal device; and
sending the sixth request to the fifth network element that serves the terminal device after switching comprises:
sending the sixth request to the fifth network element based on the seventh request.

25. The method according to claim 24, wherein sending the sixth request to the fifth network element based on the seventh request comprises:
sending the sixth request to the fifth network element when the seventh request indicates to periodically send the energy consumption.

26. A communication apparatus, comprising a module configured to perform the method according to any one of claims 1 to 25.

27. A communication apparatus, comprising a processor, wherein
the processor is configured to execute a computer program and/or use a logic circuit, to enable the communication apparatus to implement the method according to any one of claims 1 to 25.

28. A computer-readable storage medium, wherein the computer-readable storage medium is configured to store a program or instructions, and when the program or the instructions are run on a computer, the computer is enabled to implement the method according to any one of claims 1 to 25.

29. A computer program product, wherein the computer program product comprises computer program code, and when the computer program code is run on a computer, the computer is enabled to implement the method according to any one of claims 1 to 25.
